# EUROPEAN PATENT APPLICATION

(11) **EP 2 210 928 A1**
(43) Date of publication of application: **28.07.2010**
(21) Application number: 08833113.7
(22) Date of filing: 22.09.2008
(51) Int. Cl.: C09K 5/06, C09K 5/08

(54) **AQUEOUS SOLUTION FOR CLATHRATE HYDRATE FORMATION, HEAT-STORAGE AGENT, PROCESS FOR PRODUCING CLATHRATE HYDRATE OR SLURRY THEREOF, METHOD OF STORING/RADIATING HEAT, AND PROCESS FOR PREPARING AQUEOUS SOLUTION FOR FORMING LATENT-HEAT-STORAGE AGENT OR MAJOR COMPONENT THEREOF**

(30) Priority: 26.09.2007 JP 2007248716; 26.09.2007 JP 2007248821; 06.08.2008 JP 2008202606
(71) Applicant: JFE Engineering Corporation, Chiyoda-ku Tokyo 100-0004 (JP)
(72) Inventor: ONO, Masami, Tokyo 100-0004, (JP); HIGUCHI, Shinji, Tokyo 100-0004, (JP); ISHIDUKA, Hitoshi, Tokyo 100-0004, (JP); TAKAO, Shingo, Tokyo 100-0004, (JP); DOHI, Koichiro, Tokyo 100-0004, (JP); KITAGAWA, Takao, Tokyo 100-0004, (JP)
(74) Representative: Zech, Stefan Markus
(86) International application number: PCT/JP2008/067117
(87) International publication number: WO 2009/041396

(57) **Abstract**

A heat-storage agent which can store a large quantity of cold heat in the temperature range of 3-5°C, is highly effective in preventing supercooling, and can retain the supercooling-preventing effect even when hydrate solidification/melting is frequently repeated. Also provided are an aqueous solution which enables the formation of a clathrate hydrate serving as a major component of the heat-storage agent, and a process for producing the clathrate hydrate. The aqueous solution contains at least one of tetra-n-butylammonium bromide and tri-n-butyl-n-pentylammonium bromide as a solute and contains tetraisopentylammonium bromide as a supercooling inhibitor, the weight proportion of the tetraisopentylammonium bromide to the tetra-n-butylammonium bromide and/or tri-n-butyl-n-pentylammonium bromide being in a given range. This aqueous solution is cooled to or below a hydrate formation temperature to thereby produce a clathrate hydrate. The heat-storage agent contains this clathrate hydrate as a major component.

## Description

### Technical Field

The present invention relates to a heat storage agent used for air conditioners such as coolers and heaters and refrigeration systems for food, to a method for producing a clathrate hydrate contained as a major component of the heat storage agent and to an aqueous solution for producing the clathrate hydrate.

In the present invention, the definition and interpretation of the terms given below are as follows. The meaning and interpretation of the term does not preclude the technical scope of the present invention from being extended to the range of equivalence.
(1) When plural molecules are combined in proper conditions to form crystals, one molecule (host molecule) is made to form a basket, tunnel, laminate or network structure and other molecules (guest molecules) are made to be inserted into clearances of the structure. The term "clathrate hydrate" means one of these compounds (clathrate compounds) which have such a structure and in which the host molecule is a water molecule.
   Even if the basket, tunnel, laminate or network structure formed by a water molecule which is the host molecule is imperfect, a compound having such a structure is included in this "clathrate hydrate" as long as it is a compound in which other molecules (guest molecules) are incorporated into clearances of the structure. It is to be noted that there is the case where the "clathrate hydrate" is shortly called "hydrate" for the sake of convenience.
(2) The term "hydrate formation temperature" means the equilibrium temperature at which the clathrate hydrate is to be formed when the aqueous solution containing, as a solute, the guest molecule of the clathrate hydrate is cooled. Even in the case where the temperature at which the clathrate hydrate is formed is varied depending on the concentration of the guest compound of the aqueous solution, this temperature is called "hydrate formation temperature". When plural kinds of clathrate hydrates differing in the type of guest molecule are contained, there are many cases where the "hydrate formation temperature" ranges widely. Therefore, the peak value of specific heat in a graph in which the abscissa is the temperature and the ordinate is the specific heat is defined as "hydrate formation temperature". It is to be noted that there is the case where the "hydrate formation temperature" is called "melting point" or "solidification point" for the sake of convenience.
(3) There is the case where the aqueous solution is called "raw solution" with the implication that the clathrate hydrate is produced when the aqueous solution containing, as a solute, the guest molecule of the clathrate hydrate is cooled to a temperature not higher than the hydrate formation temperature.
(4) The term "harmonic melting point" means a melting temperature at which a hydrate is produced in the case where the composition is not changed before and after the phase is changed from the aqueous solution (liquid phase) to the hydrate (solid phase) (for example, when a hydrate having the same guest molecule concentration as the original aqueous solution is generated by cooling) when the aqueous solution is cooled to generate the hydrate. In a phase diagram in which the ordinate is the melting point and the abscissa is the concentration, the temperature (melting point) at which the clathrate hydrate is produced is changed corresponding to the concentration of the guest molecule of the aqueous solution. In this case, the maximum point is the harmonic point.
(5) The term "harmonic concentration" means the concentration of the raw solution giving the harmonic melting point.
(6) The term "harmonic aqueous solution" means a raw solution having such a concentration as to give the harmonic melting point.
(7) The term "slurry" means such a state that solid particles are dispersed in a liquid or a material put into that state. Though there is the case where a surfactant is added or mechanical stirring is carried out to put the solid particles which tend to be precipitated, into a floated state, any material may be called "slurry" as long as the solid particles are dispersed or suspended in the liquid. Any material may be called "slurry" even if the solid particles are dispersed or suspended unevenly as long as the solid particles are dispersed or suspended in the liquid.
(8) The term "heat storage agent" means a material which has such an effect or nature that it accumulates thermal energy and which is used in heat storage applications. Any material is regarded as a "heat storage agent" as long as it has such an effect or nature that it accumulates thermal energy and is used in heat storage applications regardless of whether or not it is made of plural kinds of materials, whether or not it contains additives, whether or not it is used in a liquid state, solid state or slurry state and whether or not it is received in a container or a capsule. There is the case where among these "heat storage agents", those which primarily accumulate thermal energy corresponding to latent heat are referred to as "latent heat storage agent" and those which primarily accumulate sensible thermal energy are referred to as "sensible heat storage agent".
   Since the clathrate hydrate has such an effect or nature that it accumulates thermal energy and which is used in heat storage applications, the clathrate hydrate is able to be a "heat storage agent" and particularly a "latent heat storage agent".
(9) The term "major component" of the heat storage agent means those which are respectively the ingredient of the heat storage agent, the ingredient contributing to developments of such an effect or nature that it accumulates the thermal energy of the heat storage agent or serving as a cause of the developments and of which the existence as its ingredient allows the heat storage agent is used in heat storage applications. Any material may be regarded as the "major component" of the heat storage agent as long as it is such a ingredient regardless of whether or not it is made of plural kinds of materials, whether or not it contains additives, whether or not it is used in a liquid state, solid state or slurry state, whether or not it is included a lot and whether or not it is received in a container or a capsule.

When the clathrate hydrate or its slurry is used as a heat storage agent or its "major component", the guest molecule of the clathrate hydrate may be the "major component" of the heat storage agent.

The aqueous harmonic solution of the guest molecule of the clathrate hydrate, when cooled as the raw solution, takes on such an aspect that it is not changed in composition before and after the phase is changed from a liquid phase to a solid phase and that the aqueous harmonic solution itself is transformed into a clathrate hydrate. Taking notice in this point, the aqueous harmonic solution of the guest molecule itself is the "major component" of the heat storage agent but may be just like the heat storage agent from another aspect particularly after cooled and solidified when the clathrate hydrate is used as the heat storage agent or as its "major component".

There is the case where the "major component" of the heat storage agent is called "heat storage agent major component".

### Background Art

Because the latent heat storage agent has the advantage that it has a higher heat accumulating density than a sensible heat storage agent, has a constant phase change temperature and has a stable heat takeout temperature, it has been put to practical use in many applications. In, for example, an air conditioning system, it is desired to reduce pump power for transporting the heat medium to reduce the installation cost and operation cost, and therefore, studies are being made concerning the use of a latent heat storage agent having a higher heat accumulating density to increase the heat transport density.

As such a latent heat storage agent, a clathrate hydrate of a tetraalkylammonium compound is known (Patent Reference 1 and Patent Reference 2).

Because the clathrate hydrate of a tetraalkylammonium compound has a large latent heat when the hydrate is produced, so that it has a relatively large accumulating heat quantity and also it is not flammable unlike paraffin, so that it is easily handled, and the clathrate hydrate is therefore a very useful heat storage agent. Also, because the clathrate hydrate of a tetraalkylammonium compound has a harmonic melting point higher than the melting point of ice (0°C), the temperature of the cooling medium when the heat storage agent is cooled to produce a hydrate may be higher, and there is therefore the advantage that the coefficient of performance (COP) of a refrigerator is raised, which affords an energy saving (Patent Reference 3).

There is the case where no hydrate is produced and the raw solution keeps the state of an aqueous solution even if the raw solution is cooled to the hydrate formation temperature (melting point or solidification point) and is further cooled to a lower temperature. Such a state or phenomenon is called "supercooling state" or "supercooling phenomenon" (hereinafter, referred to simply as "supercooling" according to the case). When the level of the supercooling, that is, the degree of the supercooling is higher in the case of using a hydrate as the heat storage agent, there is the problem that the cooled temperature (the temperature of a cooling medium when the cooling medium is used) of the raw solution must be dropped and also, the production of a hydrate is delayed. It is therefore important to reduce the degree of supercooling to a value as small as possible and to prevent or inhibit the supercooling (hereinafter referred to simply as "prevention of supercooling", according to the case) (refer to Patent Reference 4).

Attempts have been made to prevent or inhibit supercooling by blending, for example, microparticles in a raw solution to make the microparticles function as the core-forming material of a hydrate (Patent Reference 5) or by adding a chemical having a supercooling inhibitive effect or nature, that is, a supercooling inhibitor in a raw solution.
Patent Reference 1: JP-A 57-35224
Patent Reference 2: Japanese Patent No. 3641362
Patent Reference 3: JP-A 2007-40641
Patent Reference 4: JP-A 2001-343139
Patent Reference 5: Japanese Patent No. 3407659

### Disclosure of Invention

The method disclosed in Patent Reference 5 which reveals such a technique as to blend microparticles in the raw solution poses the problem that if the microparticles are not uniformly dispersed in the raw solution, the supercooling inhibitive effect is not widespread in the raw solution, so that time is taken to make the effect tangible and also, poses the problem that the microparticles are separated from the raw solution, so that the supercooling inhibitive effect is not obtained when the production or coagulation and melting of the hydrate are repeated.

On the other hand, the latter method which reveals such a technique as to add a supercooling inhibitor in the raw solution also poses a problem. For example, in the case of supplying a supercooling inhibitor in the raw solution when supercooling arises or on the premise that the supercooling will arise, a problem similar to that in the case of adding microparticles arises. Specifically, even if the supercooling inhibitor is supplied to the raw solution at proper time, the supercooling inhibitor is not immediately widespread in the whole aqueous solution. Therefore, it takes time to spread the supercooling inhibitive effect in the whole aqueous solution and the supercooling cannot be prevented or suppressed sufficiently in a short time as a whole. This becomes a large problem which should be solved when it is necessary to prevent a variation in the production time of the clathrate hydrate every heat storage (in other words, to stabilize the production of the clathrate hydrate) or in the case where it is necessary to produce the clathrate hydrate rapidly from the necessity for producing the clathrate hydrate in a short time. Therefore, when a supercooling inhibitor is available which produces the supercooling inhibitive effect if it is first added to the raw solution, that would be the possible best thing.

Of course, even in the case where the supercooling effect is produced if a supercooling inhibitor is first added to the raw solution, there is the case where the temperature at which a hydrate is produced from the raw solution which is first prepared is excessively varied and the quantity of heat to be accumulated cannot be secured if the supercooling inhibitor is added in an inadequate amount to the raw solution. Also, there is a fear that the supercooling inhibitive effect is deteriorated with time. In, for example, an actual working circumstance where the heat storage agent is used, heat storage and heat radiation (hereinafter, collectively called "heat storage/radiation" according to the case) are repeated, that is, the generation or coagulation and melting of clathrate hydrate are frequently repeated. The repetition of heat storage and heat radiation sometimes gives rise to deterioration in supercooling inhibitive effect with time.

In view of this situation, the inventors of the present invention have found that supercooling is removed in a short time, that is, heat storage is carried out in a short time and further, the repetition of heat storage/heat radiation does not cause a deterioration in supercooling inhibitive effect with time by adding, as a supercooling removing agent, tetra-n-butylammonium fluoride (TBAF) or its aqueous solution to a heat storage agent containing an aqueous tetra-n-butylammonium solution as its major component (JP-A 2007-246778).

On the other hand, tetra-n-butylammonium fluoride (TBAF) contains fluorine and is therefore of such a nature that it forms fluorine ions in an aqueous solution and tends to corrode metals such as aluminum and carbon steel. As to this corrosion problem, the inventors of the present invention have found that a deoxidizing type corrosion inhibitor such as a sodium or lithium salt of sulfites or thiosulfates is effective to inhibit corrosion.

The method in which this deoxidizing type corrosion inhibitor is added is effective when the environment under which the heat storage agent is used is an atmosphere from which air or oxygen is excluded. However, when air or oxygen is allowed to intrude intermittently or successively into an environment where a heat storage agent formulated with tetra-n-butylammonium fluoride is used or when the heat storage agent is used under an atmosphere, it is necessary to add the deoxidizing type corrosion inhibitor in order to keep a concentration of the inhibitor at the concentration corresponding to the amount of existing oxygen. If, in the case where air or oxygen is allowed to intrude successively for a long period of time, the deoxidizing type corrosion inhibitor is added corresponding to this, reaction products between the deoxidizing type corrosion inhibitor and oxygen are accumulated, causing an unbalanced composition of the heat storage agent, which brings about a fear as to a change in melting point, reduction in the quantity of latent heat in a working temperature range and deterioration in supercooling inhibitive effect.

Also, examples of other corrosion inhibitors include film formation type corrosion inhibitors such as sodium, potassium, calcium or lithium salts of a polyphosphate, tripolyphosphate, tetrapolyphosphate, disalt of hydrogenphosphate, pyrophosphate or metaphosphate. However, when air or oxygen is allowed to intrude intermittently or successively into an environment where a heat storage agent is used or when the heat storage agent is used under an atmosphere, there is the case where sufficient corrosion inhibitive performance is not exhibited.

The present invention has been made to solve the above problems and it is an object of the present invention to provide technologies enabling a reduction in the degree of supercooling of the raw solution or prevention or restriction of supper cooling when the raw solution is cooled to produce a clathrate hydrate, technologies enabling the raw solution to be resistant to a deterioration in supercooling inhibitive effect even if the generation or coagulation and melting of the clathrate hydrate are frequently repeated and technologies concerned.

An aqueous solution for forming a clathrate hydrate according to a first aspect of the present invention is **characterized in that** the aqueous solution comprises tetra-n-butylammonium bromide (TBAB) or tri-n-butyl-n-pentylammonium bromide (TBPAB) as a solute, and tetra-iso-pentylammonium bromide (TiPAB) added as a supercooling inhibitor.

An aqueous solution for forming a clathrate hydrate according to a second aspect of the present invention is **characterized in that** the aqueous solution comprises tetra-n-butylammonium bromide (TBAB) as a solute, and tetra-iso-pentylammonium bromide (TiPAB) added as a supercooling inhibitor.

An aqueous solution for forming a clathrate hydrate according to a third aspect of the present invention is the aqueous solution according to the second aspect, **characterized in that** the ratio by weight of tetra-iso-pentylammonium bromide to the aqueous solution containing tetra-n-butylammonium bromide as a solute is 0.1% or more and 2.0% or less.

An aqueous solution for forming a clathrate hydrate according to a fourth aspect of the present invention is the aqueous solution according to the second aspect, **characterized in that** the concentration of tetra-n-butylammonium bromide is 15% by weight or more and 40.5% by weight or less and the ratio by weight of tetra-iso-pentylammonium bromide to the aqueous solution containing tetra-n-butylammonium bromide as a solute is 0.1% or more and 2.0% or less.

An aqueous solution for forming a clathrate hydrate according to a fifth aspect of the present invention is the aqueous solution according to any one of the second to fourth aspects, **characterized in that** the aqueous solution further comprises a corrosion inhibitor.

A heat storage agent according to a sixth aspect of the present invention comprises a clathrate hydrate produced by cooling the aqueous solution for the formation of a clathrate hydrate according to any one of the second to fifth aspects to a temperature not higher than the hydrate formation temperature.

A heat storage agent according to a seventh aspect of the present invention comprises a clathrate hydrate produced by cooling the aqueous solution for the formation of a clathrate hydrate according to any one of the second to fifth aspects to a temperature not higher than the hydrate formation temperature, wherein the heat storage agent includes a slurry in which the hydrate is dispersed or suspended in the aqueous solution or in an aqueous solvent thereof.

A heat storage agent according to an eighth aspect of the present invention comprises tetra-n-butylammonium bromide, tetra-iso-pentylammonium bromide as a supercooling inhibitor and water.

A heat storage agent according to a ninth aspect of the present invention is the heat storage agent according to any one of the sixth to eighth aspects, the heat storage agent being formulated with a corrosion inhibitor.

A method for preparing a clathrate hydrate or its slurry according to a tenth aspect comprisespreparing the aqueous solution for formation of a clathrate hydrate according to any one of the second to fifth aspects and cooling the aqueous solution to produce a clathrate hydrate.

A heat accumulating and radiating method according to an 11th aspect comprises accumulating thermal energy by cooling the aqueous solution for formation of a clathrate hydrate according to any one of the second to fifth aspects to form a clathrate hydrate and radiating thermal energy by melting the produced clathrate hydrate.

A method for preparing an aqueous solution for forming a latent heat storage agent or its major component according to a 12th aspect comprises adding tetra-iso-pentylammonium bromide to an aqueous solution of tetra-n-butylammonium bromide.

A method for preparing an aqueous solution for producing a latent heat storage agent or its major component according to a 13th aspect of the present invention is the preparation method according to the 12th aspect, **characterized in that** the ratio by weight of tetra-iso-pentylammonium bromide to the aqueous solution of tetra-n-butylammonium bromide is 0.1% or more and 2.0% by weight or less.

An aqueous solution for producing a latent heat storage agent or its major component according to a 14th aspect of the present invention is an aqueous solution which is cooled to produce a clathrate hydrate and contains tetra-n-butylammonium bromide as a solute and to which tetra-iso-pentylammonium bromide is added, wherein the concentration of tetra-n-butylammonium bromide is 15% by weight or more and 40.5% by weight or less and the ratio by weight of tetra-iso-pentylammonium bromide to the aqueous solution containing tetra-n-butylammonium bromide as a solute is 0.1% or more and 2.0% or less.

A method for producing a latent heat storage agent, a clathrate hydrate which is to be a major component of the latent heat storage agent or its slurry according to a 15th aspect comprisespreparing the aqueous solution according to the 14th aspect and cooling the aqueous solution to produce a clathrate hydrate.

An aqueous solution for formation of a clathrate hydrate according to a 16th aspect of the present invention is **characterized in that** the aqueous solution comprises tri-n-butyl-n-pentylammonium bromide (TBPAB) as a solute, and tetra-iso-pentylammonium bromide (TiPAB) added as a supercooling inhibitor.

An aqueous solution for producing a clathrate hydrate according to a 17th aspect of the present invention is the aqueous solution according to the 16th aspect, **characterized in that** the ratio by weight of tetra-iso-pentylammonium bromide to the aqueous solution containing tri-n-butyl-n-pentylammonium bromide as a solute is 0.5% or more and 5.0% or less.

An aqueous solution for producing a clathrate hydrate according to a 18th aspect of the present invention is the aqueous solution according to the 16th aspect, **characterized in that** the concentration of tri-n-butyl-n-pentylammonium bromide is 15% by weight or more and 34.1% by weight or less and the ratio by weight of tetra-iso-pentylammonium bromide to the aqueous solution containing tri-n-butyl-n-pentylammonium bromide as a solute is 0.5% or more and 5.0% or less.

An aqueous solution for producing a clathrate hydrate according to a 19th aspect of the present invention is the aqueous solution according to any one of the 16th to 18th aspects and comprises a corrosion inhibitor.

A heat storage agent according to a 20th aspect of the present invention comprises a clathrate hydrate produced by cooling the aqueous solution for the formation of a clathrate hydrate according to any one of the 16th to 18th aspects of the present invention to a temperature not higher than the hydrate formation temperature.

A heat storage agent according to a 21st aspect of the present invention comprises a clathrate hydrate produced by cooling the aqueous solution for the formation of a clathrate hydrate according to any one of the 16th to 18th aspects of the present invention to a temperature not higher than the hydrate formation temperature, wherein the heat storage agent includes a slurry in which the hydrate is dispersed or suspended in the aqueous solution or in an aqueous solvent thereof.

A heat storage agent according to a 22nd aspect of the present invention comprises tri-n-butyl-n-pentylammonium bromide, tetra-iso-pentylammonium bromide as a supercooling inhibitor and water.

A heat storage agent according to a 23rd aspect of the present invention is the heat storage agent according to any one of the 20th to 22nd aspects, the heat storage agent being formulated with a corrosion inhibitive agent.

A method for formation of a clathrate hydrate or its slurry according to a 24th aspect of the present invention comprises preparing an aqueous solution for formation of a clathrate hydrate according to any one of the 16th to 19th aspects of the invention and cooling the aqueous solution to produce a clathrate hydrate.

A heat accumulating and radiating method according to a 25th aspect of the invention comprises accumulating thermal energy by cooling the aqueous solution for formation of a clathrate hydrate according to any one of the 16th to 19th aspects of the present invention to form a clathrate hydrate and radiating thermal energy by melting the produced clathrate hydrate.

A method for preparing an aqueous solution for forming a latent heat storage agent or its major component according to a 26th aspect of the invention comprises adding tetra-iso-pentylammonium bromide to an aqueous solution of tri-n-butyl-n-pentylammonium bromide.

A method for preparing an aqueous solution for producing a latent heat storage agent or its major component according to a 27th aspect is the preparation method according to the 26th aspect, **characterized in that** the ratio by weight of tetra-iso-pentylammonium bromide to the aqueous solution of tri-n-butyl-n-pentylammonium bromide is 0.5% or more and 5.0% by weight or less.

An aqueous solution for producing a latent heat storage agent or its major component according to a 28th aspect of the present invention is an aqueous solution which is cooled to produce a clathrate hydrate and contains tri-n-butyl-n-pentylammonium bromide as a solute and to which tetra-iso-pentylammonium bromide is added, wherein the concentration of tri-n-butyl-n-pentylammonium bromide is 15% by weight or more and 34.1% by weight or less and the ratio by weight of tetra-iso-pentylammonium bromide to the aqueous solution containing tri-n-butyl-n-pentylammonium bromide as a solute is 0.5% or more and 5.0% or less.

A method for producing a latent heat storage agent, a clathrate hydrate which is to be a major component of the latent heat storage agent or its slurry according to a 29th aspect comprisespreparing the aqueous solution according to the 28th aspect and cooling the aqueous solution to produce a clathrate hydrate.

An aqueous solution for producing a clathrate hydrate according to a 30th aspect of the present invention is **characterized in that** the aqueous solution comprises tetra-n-butylammonium bromide and tri-n-butyl-n-pentylammonium bromide as solutes, and tetra-iso-pentylammonium bromide added as a supercooling inhibitor.

An aqueous solution for producing a clathrate hydrate according to a 31st aspect of the present invention is the aqueous solution according to the 30th aspect, **characterized in that** the ratio of a weight of tetra-iso-pentylammonium bromide to a total weight of tetra-n-butylammonium bromide and tri-n-butyl-n-pentylammonium bromide is 0.9% or more and 16.9% or less.

An aqueous solution for producing a clathrate hydrate according to a 32nd aspect of the present invention is the aqueous solution according to the 30th aspect, **characterized in that** an addition ratio of TiPAB which is the ratio of the weight of tetra-iso-pentylammonium bromide to the total weight of tetra-n-butylammonium bromide and tri-n-butyl-n-pentylammonium bromide is, corresponding to a TBAB/(TBAB + TBPAB) ratio which is the ratio of the weight of tetra-n-butylammonium bromide to the total weight of tetra-n-butylammonium bromide and tri-n-butyl-n-pentylammonium bromide:
when the TBAB/(TBAB + TBPAB) ratio is 1% or more and less than 10%, the addition ratio of TiPAB is 5.7% or more and 16.9% or less;
when the TBAB/(TBAB + TBPAB) ratio is 10% or more and less than 20%, the addition ratio of TiPAB is 4.3% or more and 14.2% or less;
when the TBAB/(TBAB + TBPAB) ratio is 20% or more and less than 30%, the addition ratio of TiPAB is 2.8% or more and 12.4% or less;
when the TBAB/(TBAB + TBPAB) ratio is 30% or more and less than 40%, the addition ratio of TiPAB is 2.1% or more and 10.9% or less;
when the TBAB/(TBAB + TBPAB) ratio is 40% or more and less than 50%, the addition ratio of TiPAB is 2.0% or more and 10.0% or less;
when the TBAB/(TBAB + TBPAB) ratio is 50% or more and less than 60%, the addition ratio of TiPAB is 2.0% or more and 9.0% or less;
when the TBAB/(TBAB + TBPAB) ratio is 60% or more and less than 70%, the addition ratio of TiPAB is 2.0% or more and 8.2% or less;
when the TBAB/(TBAB + TBPAB) ratio is 70% or more and less than 80%, the addition ratio of TiPAB is 2.0% or more and 7.5% or less;
when the TBAB/(TBAB + TBPAB) ratio is 80% or more and less than 90%, the addition ratio of TiPAB is 2.0% or more and 6.5% or less; and
when the TBAB/(TBAB + TBPAB) ratio is 90% or more and less than 99%, the addition ratio of TiPAB is 0.9% or more and 6.0% or less.

An aqueous solution for formation of a clathrate hydrate according to a 33rd aspect of the present invention is the aqueous solution according to any one of 30th to 32nd aspects of the present invention, **characterized in that** the aqueous solution further comprises a corrosion inhibitor.

A heat storage agent according to a 34th aspect of the present invention comprises a clathrate hydrate produced by cooling the aqueous solution for the formation of a clathrate hydrate according to any one of 30th to 33rd aspects of the present invention to a temperature not higher than the hydrate formation temperature.

A heat storage agent according to a 35th aspect of the present invention comprises a clathrate hydrate produced by cooling the aqueous solution for the formation of a clathrate hydrate according to any one of 30th to 33rd aspects of the present invention to a temperature not higher than the hydrate formation temperature, wherein the heat storage agent includes a slurry in which the hydrate is dispersed or suspended in the aqueous solution or in an aqueous solvent thereof.

A heat storage agent according to a 36th aspect of the present invention comprises tetra-n-butylammonium bromide and tri-n-butyl-n-pentylammonium bromide, and tetra-iso-pentylammonium bromide as a supercooling inhibitor and water.

A heat storage agent according to a 37th aspect is the heat storage agent according to any one of the 34th to 36th aspects, the heat storage agent being formulated with a corrosion inhibitor.

A method for formation of a clathrate hydrate or its slurry according to a 38th aspect comprisespreparing an aqueous solution for formation of a clathrate hydrate according to any one of the 30th to 33rd aspects and cooling the aqueous solution to produce a clathrate hydrate.

A heat accumulating and radiating method according to a 39th aspect comprises accumulating thermal energy by cooling the aqueous solution for formation of a clathrate hydrate according to any one of the 30th to 33rd aspects to form a hydrate and radiating thermal energy by melting the produced clathrate hydrate.

A method for preparing an aqueous solution for forming a latent heat storage agent or its major component according to a 40th aspect comprises adding tetra-iso-pentylammonium bromide to an aqueous solution of tetra-n-butylammonium bromide and tri-n-butyl-n-pentylammonium bromide.

A method for preparing an aqueous solution for forming a latent heat storage agent or its major component according to a 41st aspect is the method for preparing according to the 40th aspect, **characterized in that** the ratio of the weight of tetra-iso-pentylammonium bromide to the total weight of tetra-n-butylammonium bromide and tri-n-butyl-n-pentylammonium bromide is 0.9% or more and 16.9% or less.

An aqueous solution for producing a latent heat storage agent or its major component according to a 42nd aspect of the present invention is an aqueous solution which is cooled to produce a clathrate hydrate and contains tetra-n-butylammonium bromide and tri-n-butyl-n-pentylammonium bromide as solutes and to which tetra-iso-pentylammonium bromide is added, wherein the ratio of the weight of tetra-iso-pentylammonium bromide to the total weight of tetra-n-butylammonium bromide and tri-n-butyl-n-pentylammonium bromide is 0.9% or more and 16.9% or less.

A method for producing a latent heat storage agent, a clathrate hydrate which is to be a major component of the latent heat storage agent or its slurry according to a 43rd aspect comprisespreparing the aqueous solution according to the 42th aspect and cooling the aqueous solution to produce a clathrate hydrate.
(1) According to the present invention, tetra-iso-pentylammonium bromide is added to any one of an aqueous solution containing tetra-n-butylammonium bromide as a solute, an aqueous solution containing tri-n-butyl-n-pentylammonium bromide as a solute and an aqueous solution containing tetra-n-butylammonium bromide and tri-n-butyl-n-pentylammonium bromide as solutes. It is therefore possible to prevent or inhibit supercooling when a heat storage agent or a hydrate which is to be its major component is produced by cooling the aqueous solution.

Since tetra-iso-pentylammonium bromide is added to any one of an aqueous solution containing tetra-n-butylammonium bromide as a solute, an aqueous solution containing tri-n-butyl-n-pentylammonium bromide as a solute and an aqueous solution containing tetra-n-butylammonium bromide and tri-n-butyl-n-pentylammonium bromide as solutes in such a manner that the ratio by weight of tetra-iso-pentylammonium bromide to each solution is in a predetermined range, the obtained solution is superior in supercooling inhibitive ability and a reduction in the quantity of latent heat in a temperature range from 3 to 15°C can be made to be within the tolerance limits of variation. Also, the raw solution is made to be resistant to a deterioration in supercooling inhibitive effect even if the generation or coagulation and melting of the clathrate hydrate are frequently repeated.

Therefore, the present invention can attain an aqueous solution which is reduced in the degree of supercooling or is resistant to supercooling for forming a clathrate hydrate or for producing a heat storage agent or its major component, an aqueous solution which is made to be resistant to a deterioration in supercooling inhibitive effect even if the generation or coagulation and melting of the clathrate hydrate are frequently repeated for forming a clathrate hydrate or for producing a heat storage agent or its major component, a heat storage agent containing a clathrate hydrate or its slurry, the clathrate hydrate being producible from a raw solution while preventing or inhibiting supercooling, a method for producing a clathrate hydrate or its slurry while reducing supercooling or preventing or inhibiting supercooling, a heat storage agent which is producible while preventing or inhibiting supercooling, a heat accumulating and radiating method which is made to be resistant to a deterioration in supercooling inhibitive effect even if the generation or coagulation and melting of the hydrate in the raw solution are frequently repeated, and a method for producing a latent heat storage agent, or a clathrate hydrate which is to be a major component of the latent heat storage agent or its slurry, the latent heat storage agent being producible while preventing or inhibiting supercooling. Also, the present invention can attain a latent heat storage agent enabling a heat storage agent to be so adjusted that a drop in the quantity of heat per unit weight of the heat storage agent is more increased.

The details of the function and advantage of the present invention, embodiments or the functions and advantages specific to these embodiments will be described separately.
(2) Tetra-n-butylammonium bromide, tri-n-butyl-n-pentylammonium bromide and tetra-iso-pentylammonium bromide each contains a bromine ion and is therefore corrosive. For this reason, according to the 5th, 9th, 19th, 23rd, 33rd and 37th embodiments, a corrosion inhibitor is also added to the raw solution and therefore, an aqueous solution for forming a clathrate hydrate and a heat storage agent which are limited in corrosion can be respectively realized.

Also, in the case of adding tetra-iso-pentylammonium fluoride as a supercooling inhibitor, it is necessary to add a corrosion inhibitor in a large amount because this tetra-iso-pentylammonium fluoride has highly corrosive fluorine ions. According to the present invention, on the other hand, tetra-iso-pentylammonium bromide is added, as a supercooling inhibitor, to any one of an aqueous solution containing tetra-n-butylammonium bromide as a solute, an aqueous solution containing tri-n-butyl-n-pentylammonium bromide as a solute and an aqueous solution containing tetra-n-butylammonium bromide and tri-n-butyl-n-pentylammonium bromide as solutes and therefore, the amount of the corrosion inhibitor to be added can be reduced. The reduction in the amount of the corrosion inhibitor to be added in the present invention makes it possible to prevent the problems which arise when tetra-n-butylammonium fluoride is added as the supercooling inhibitor, that is, the problem that it is necessary to add a corrosion inhibitor in order to keep a concentration of the inhibitor corresponding to intermittent or successive intrusion of air or oxygen into an environment where a heat storage agent is used, and the problem that reaction products of the corrosion inhibitor are accumulated, causing an unbalanced composition of the heat storage agent, which brings about a fear as to a variation in melting point, reduction in the quantity of latent heat in a working temperature range and deterioration in supercooling inhibitive ability.

As a corrosion inhibitor which may be used in the present invention, a deoxidizing type corrosion inhibitor which consumes dissolved oxygen to inhibit corrosion is preferable in the case where the heat storage agent is used in a closed environment, that is, in an environment into which dissolved oxygen is not intruded. Specific examples of such a deoxidizing type corrosion inhibitor include sodium salts or lithium salts of sulfites or thiosulfates. At least one type corrosion inhibitor selected from these examples may be added to the heat storage agent to inhibit corrosion.

As other corrosion inhibitors applicable in a closed environment, there are film forming type corrosion inhibitors that form a coating film which prevents corrosion on the surface of a metal to thereby protect the metal from corrosion, and specific examples of the film forming type corrosion inhibitor include sodium salts, potassium salts, calcium salts or lithium salts of polyphosphates, tripolyphosphates, tetrapolyphosphates, disalts of hydrogenphosphates, pyrophosphates or metasilicates. At least one type selected from these corrosion inhibitors may be added to the heat storage agent to inhibit corrosion.

Corrosion can be more inhibited by combining these film forming type corrosion inhibitors with the aforementioned sulfites or thiosulfates which are deoxidizing type corrosion inhibitors.

Moreover, examples of other corrosion inhibitors applicable in a closed environment include nitrites, benzotriazole, hydrazine, erysorbate, ascorbate and saccharides.

When the heat storage agent is used in an atmosphere, bromides or sulfates of zinc, magnesium or calcium may be used as the corrosion inhibitor used under an atmosphere. When at least one type selected from these corrosion inhibitors is added, a hydroxide ion and carbonic acid ion contained in a solution of the heat storage agent are bound with a zinc ion, magnesium ion or calcium ion contained in the corrosion inhibitor to form carbonates and hydroxides which are deposited on the surface of the metal to form a film, making it possible to inhibit corrosion, wherein these corrosion inhibitors function as the film forming corrosion inhibitor.

The aforementioned magnesium or calcium bromide or sulfate is added and at least one type of phosphate selected from sodium, potassium and lithium phosphates is further added to the heat storage agent to bind the phosphoric acid ion with the zinc ion, magnesium ion or calcium ion, thereby forming a phosphate, which is then deposited on the surface of a metal to form a coating film, thereby making possible to inhibit corrosion. Because phosphates of sodium, potassium or lithium have large solubility and it is therefore possible to form a coating film efficiently, thereby inhibiting corrosion. The phosphoric acid ion used to form the deposited film has a more valid effect. Because the phosphate has a function as a pH regulator, it is possible to prevent the pH of the system from being lowered by the dissolution of carbon dioxide from the atmosphere and the hydrolysis of corrosion products.

A heat storage agent having less corrosiveness without large variations in melting point and in the quantity of accumulating heat can be provided by adding the above corrosion inhibitor thereto.
(3) The heat storage agent and, particularly, the latent heat storage agent according to the present invention not only has high supercooling inhibitive effect and can keep the supercooling effect even if the production, coagulation and melting of the hydrate are frequently repeated, but also can accumulate much cold heat in a temperature range from 3 to 15°C. Therefore, the heat storage agent of the present invention is particularly promising for heat storage agents in air-conditioning applications.

The reason why latent heat storage agents which can accumulate heat in a temperature range from 3 to 15°C are useful in air-conditioning applications is as follows.

Specifically, in air conditioning using a latent heat storage agent, a heat is transferred from the heat storage agent storing cold heat from a cold heat source as latent heat to the air which is an air conditioning load directly or through a medium. The heat-exchanged air is discharged into a space which is an air-conditioning subject to thereby control the temperature and humidity of the space. In many cases, the temperature of the cold air blown from the interior equipment in cooling air conditioning is usually about 15°C and about 17°C at the highest. If the temperature is higher than that temperature (17°C), it is difficult to obtain the same level of air conditioning effect and, on the contrary, less air conditioning effect is obtained insofar as the amount of air discharged into a space which is an air conditioning subject is not increased. For this reason, the latent heat storage agent supplying heat to the cold air needs to be able to accumulate latent heat at 15°C or less in consideration of a temperature difference (about 2°C) for heat transfer to the air. Also, in the case of ice which is a typical example of the latent heat storage agent used in air conditioning applications, it is necessary to cool at a temperature of 0°C or less and therefore, the COP of the refrigerator is dropped, giving rise to the problem that the energy required for accumulating cold heat is made large, so that energy saving cannot be attained. In order to attain energy saving while keeping a high COP, the latent heat storage agent used in air conditioning applications needs to accumulate heat at a temperature of 5°C or more and 3°C or more at the lowest. Therefore, latent heat storage agents capable of accumulating heat at a temperature range from 3 to 15°C are regarded to be adaptable for use in air conditioning applications.

However, the heat storage agent capable of accumulating thermal energy at a temperature range from 3 to 15°C must be those which stand to actual use whether or not it is used in air conditioning applications.

There is, for example, a heat storage agent (melting point: 10 to 25°C) prepared by adding a polyglycerin to a hydrate type major component of a heat storage agent which contains trimethylol ethane, water and urea. This heat storage agent is described in detail in JP-A 2000-256659. As far as the descriptions of the specification, the number of repetitions of coagulation and melting is confirmed to be only about 100 at most. Only such a level of repetitions limits the object of use and the supercooling inhibitive effect is deteriorated when the separation and localization of the concentration of component materials in the aqueous solution or the phase separation of a hydrate produced by cooling from the mother phase arise. It is therefore unlikely that this heat storage agent withstands actual use widely (particularly, civilian use).

On the other hand, the heat storage agent according to the present invention comprises tetra-n-butylammonium bromide, tetra-iso-pentylammonium bromide and water, tri-n-butyl-n-pentylammonium bromide, tetra-iso-pentylammonium bromide and water, or tetra-n-butylammonium bromide, tri-n-butyl-n-pentylammonium bromide, tetra-iso-pentylammonium bromide and water. Also, the aqueous solution for forming a hydrate according to the present invention comprises tetra-n-butylammonium bromide and tetra-iso-pentylammonium bromide, tri-n-butyl-n-pentylammonium bromide and tetra-iso-pentylammonium bromide, or tetra-n-butylammonium bromide, tri-n-butyl-n-pentylammonium bromide and tetra-iso-pentylammonium bromide. Tetra-n-butylammonium bromide, tri-n-butyl-n-pentylammonium bromide and a mixture of tetra-n-butylammonium bromide and tri-n-butyl-n-pentylammonium bromide respectively accumulate thermal energy corresponding to latent heat at a temperature range from 3 to 15°C in the state of an aqueous solution. The hydrate formation temperature is not largely changed if tetra-iso-pentylammonium bromide is added in a small amount. When a clathrate hydrate is produced from a raw solution containing tetra-iso-pentylammonium bromide as an additive, the degree of supercooling of the raw solution is reduced or supercooling is prevented or restricted. Also, even if the production or coagulation and melting of the hydrate in the raw solution are repeated 1000 times or more, the supercooling inhibitive effect is not deteriorated.

Therefore, the present invention produces such a particularly useful advantage that a heat storage agent which can accumulate heat energy at a temperature range from 3 to 15°C and can withstand actual use, can be attained.

The present invention is not limited to use in air conditioning applications though the present invention can attain, for example, a (latent heat) heat storage agent which can accumulate heat at a temperature range from 3 to 15°C and an aqueous solution having a hydrate producing temperature in a temperature range from 3 to 15°C. The present invention is based on the technical idea enabling the production of a heat storage agent which can accumulate thermal energy at a temperature range from 3 to 15°C and an aqueous solution having a hydrate producing temperature in a temperature range from 3 to 15°C. This is an important point to be mentioned.

### Brief Description of Drawings

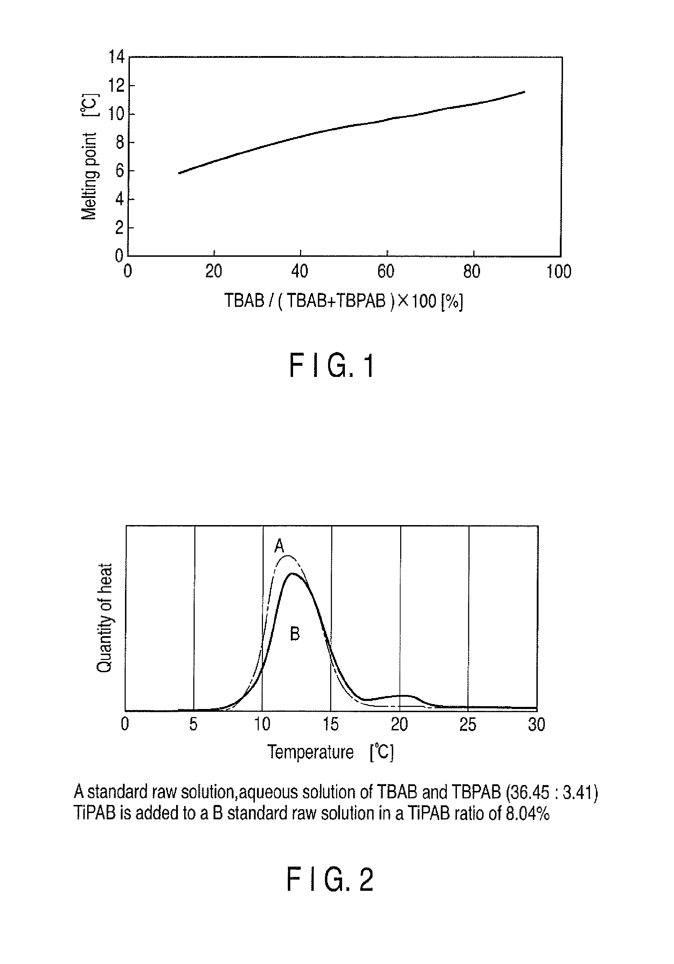

FIG. 1 is a graph showing the relation between the ratio of an aqueous harmonic solution of tetra-n-butylammonium bromide to an aqueous mixture solution of an aqueous harmonic solution of tetra-n-butylammonium bromide and an aqueous harmonic solution of tri-n-butyl-n-pentylammonium bromide, and the melting point of the mixture.
FIG. 2 is a view showing the results of measurement of DSC of a heat storage agent according to the present invention by a graph in which the abscissa is the temperature and the ordinate is the quantity of latent heat.

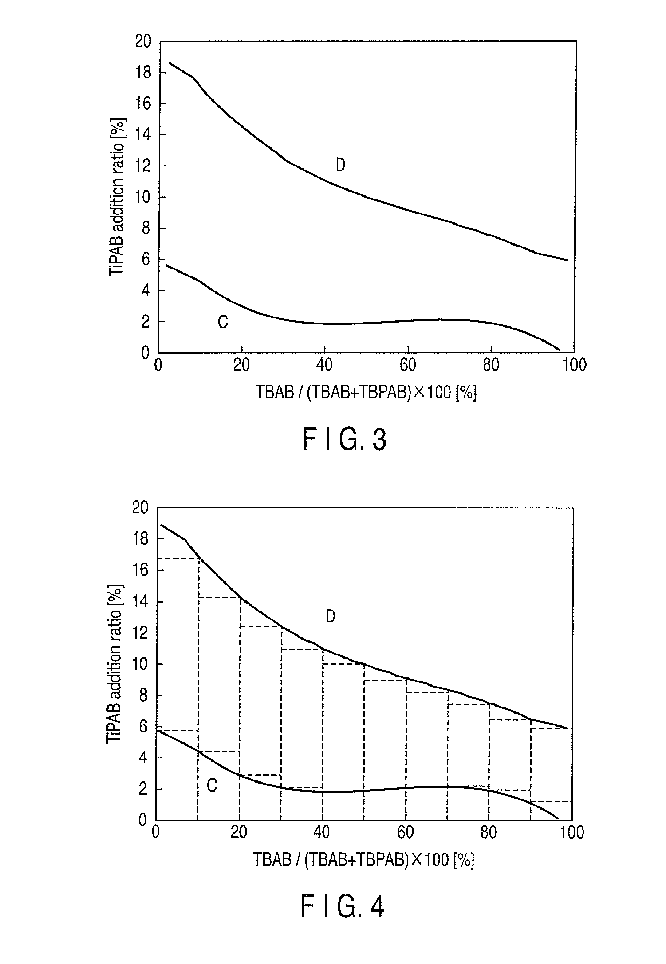

FIG. 3 is a view showing the relation between addition ratio of TiPAB (%) and TBAB/(TBAB + TBPAB)(%) by a graph in which the abscissa is TBAB/(TBAB + TBPAB)(%) and the ordinate is the addition ratio of TiPAB (%) wherein the curve C indicating the minimum value of the addition ratio of TiPAB (%) at which the supercooling inhibitive ability is not deteriorated, and the curve D indicating the maximum value within which a reduction in the quantity of latent heat of tetra-iso-pentylammonium bromide at a temperature range from 3 to 16°C is less than 10%.
FIG. 4 is an explanatory view for quantitatively explaining a preferable area among parts enclosed by the curves C and D.

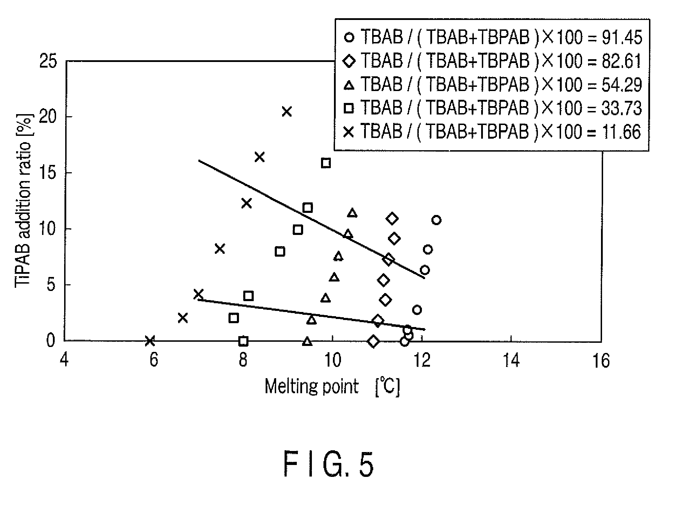

FIG. 5 is a view obtained by plotting the relation of a melting point as shown in Table 16 to Table 20 to the addition ratio of TiPAB on the coordinate in which the abscissa is the melting point of a heat storage agent prepared by adding an aqueous harmonic solution of tetra-iso-pentylammonium bromide to an aqueous mixture solution obtained by blending an aqueous harmonic solution of tetra-n-butylammonium bromide and an aqueous harmonic solution of tri-n-butyl-n-pentylammonium bromide and the ordinate is the addition ratio of an aqueous harmonic solution of iso-pentylammonium.

### Best Mode for Carrying Out the Invention

The present invention will be explained in detail by way of embodiments. (A) A heat storage agent containing tetra-n-butylammonium bromide, tetra-iso-pentylammonium bromide and water, (B) a heat storage agent containing tri-n-butyl-n-pentylammonium bromide and tetra-iso-pentylammonium bromide and water and (C) a heat storage agent containing tetra-n-butylammonium bromide, tri-n-butyl-n-pentylammonium bromide, tetra-iso-pentylammonium bromide and water will be explained one by one.

Hereinafter, there is the case where tetra-n-butylammonium bromide is abbreviated as "TBAB", tri-n-butyl-n-pentylammonium bromide is abbreviated as "TBPAB" and tetra-iso-pentylammnium bromide is abbreviated as "TiPAB" for the sake of convenience. (A) A heat storage agent containing tetra-n-butylammonium bromide, tetra-iso-pentylammonium bromide and water
1. New findings relating to the present invention will be explained. Some aspects of the present invention are based on these new findings.
(1) Tetra-n-butylammonium bromide forms a clathrate hydrate, the harmonic melting point of the clathrate hydrate is about 12°C and the quantity of latent heat at this harmonic melting point is 178 J/g. With regard to a heat storage agent (particularly, heat storage agent containing a clathrate hydrate, as its major component) containing the clathrate hydrate in which the guest molecule is tetra-n-butylammonium bromide, the inventors of the present invention have made earnest studies concerning a material and its composition, which can produce and keep the effect of preventing or inhibiting supercooling which takes place when cooling a raw solution containing tetra-n-butylammonium bromide as a solute and as a result, found that it is effective to add tetra-iso-pentylammonium or an aqueous solution containing it as that material.

The following is the result of the estimation of the reason why a supercooling inhibitive effect is produced by adding tetra-iso-pentylammonium bromide to the raw solution containing tetra-n-butylammonium bromide as a solute.

Specifically, the harmonic melting point of a hydrate of tetra-iso-pentylammonium bromide is 28°C which is sufficiently higher than the melting point of a hydrate produced from a raw solution containing tetra-n-butylammonium bromide as a solute or the melting point of a hydrate of tetra-n-butylammonium bromide. For this reason, when the above raw solution is cooled, a hydrate of tetra-iso-pentylammonium bromide is formed earlier than a hydrate of tetra-n-butylammonium bromide. Then, the hydrate of tetra-iso-pentylammonium bromide becomes a nucleus (product nucleus) which is an opportunity or inducing factor for the formation of the hydrate of tetra-n-butylammonium bromide to produce a hydrate which is to be a major component of the heat storage agent in a short time, with the result that the supercooling is prevented or inhibited. Also, the hydrate of tetra-iso-pentylammonium bromide is an analogue of the hydrate of tetra-n-butylammonium bromide and therefore the both are compatible and have a similar crystal structure, with the result that the supercooling is prevented or prohibited.

Also, because tetra-iso-pentylammonium bromide has isopentyl as the alkyl constituting its molecule, it is less hydrophilic to water in contrast to tetra-n-butylammonium fluoride having n-butyl as the alkyl and it tends to form a clathrate hydrate from the state of an aqueous solution with ease. This tendency brings about the following results. Specifically, when a raw solution prepared by adding tetra-iso-pentylammonium bromide to an aqueous solution of tetra-n-butylammonium bromide is cooled, a hydrate of tetra-iso-pentylammonium bromide is formed more rapidly than in the case where a raw solution prepared by adding tetra-n-butylammonium fluoride to an aqueous solution of tetra-n-butylammonium bromide is cooled to produce a hydrate of tetra-n-butylammonium fluoride, and the hydrate of tetra-iso-pentylammonium bromide becomes a nucleus (product nucleus) which is an opportunity or inducing factor for the formation of the hydrate of tetra-n-butylammonium bromide with the result that the supercooling is prevented or prohibited.

As mentioned above, tetra-iso-pentylammonium bromide tends to form a hydrate more easily than tetra-n-butylammonium fluoride. This implies that tetra-iso-pentylammonium bromide is more effective as a supercooling inhibitor. Also, the amount of tetra-iso-pentylammonium bromide to be added as a supercooling inhibitor to an aqueous solution of tetra-n-butylammonium bromide can be more reduced than in the case of adding tetra-n-butylammonium fluoride as a supercooling inhibitor, ensuring that an adverse influence, caused by the addition of the supercooling inhibitor, on the thermal characteristics of the heat storage agent containing the hydrate as its major component, can be decreased to a minimum.
(2) With regard to the amount of tetra-iso-pentylammonium bromide to be added as a supercooling inhibitor, it is preferable to add tetra-iso-pentylammonium bromide such that the ratio (percentage) by weight of tetra-iso-pentylammonium bromide to the aqueous solution of tetra-n-butylammonium bromide is in a predetermined range. When the ratio is less than the lower limit of the predetermined range, the amount of a hydrate of tetra-iso-pentylammonium bromide is decreased and the hydrate of tetra-iso-pentylammonium bromide scarcely becomes a product nucleus of a hydrate of tetra-n-butylammonium bromide, resulting in insufficient supercooling inhibitive effect. When the ratio exceeds the upper limit of the predetermined range on the other hand, this adversely affects a hydrate produced from an aqueous solution containing tetra-n-butylammonium bromide and tetra-iso-pentylammonium bromide or a hydrate containing tetra-n-butylammonium bromide and tetra-iso-pentylammonium bromide and hence, the quantity of heat of a heat storage agent containing the hydrate as its major component, resulting in significant reduction in the quantity of heat which can be accumulated at a temperature range from 3 to 15°C.

Therefore, tetra-iso-pentylammonium bromide is added in an appropriate amount (or in a range of proper amount), thereby making it possible to produce the effect of the supercooling inhibitor more exactly or more efficiently while reducing an adverse influence, caused by the addition of the supercooling inhibitor, on the thermal characteristics of the major component of the heat storage agent, to a minimum.
2. Next, the addition of tetra-iso-pentylammonium bromide as a supercooling inhibitor and its effect will be explained in more detail.

### <Method of measurement and evaluation>

### A. Raw solution

Aqueous solutions (raw solutions) for forming a hydrate are prepared by adding tetra-iso-pentylammonium bromide to the aqueous solution of tetra-n-butylammonium bromide prepared in a certain concentration in different concentrations by weight (the ratio by weight of tetra-iso-pentylammonium bromide to be added to an aqueous solution of tetra-n-butylammonium) (incidentally, a hydrate produced by cooling this aqueous solution may be used by itself or in the form of a slurry obtained by dispersing or suspending it in an aqueous solution for forming a heat storage agent (particularly, a latent heat storage agent) or as a major component of the heat storage agent). Also, a raw solution in which tetra-iso-pentylammonium bromide is not added to an aqueous solution of tetra-n-butylammonium bromide is prepared.

Because, the quantity of latent heat of a hydrate produced by cooling the aqueous solution of tetra-n-butylammonium bromide is a maximum when tetra-n-butylammonium bromide is contained in the harmonic concentration, first, a raw solution in which tetra-iso-pentylammonium bromide is added in an aqueous solution of tetra-n-butylammonium bromide having the harmonic concentration (40% by weight) is prepared and evaluated. Then, raw solutions in which tetra-iso-pentylammonium bromide is added to aqueous solutions of tetra-n-butylammonium bromide having concentrations of 35% by weight to 15% by weight are also prepared and evaluated.

### B. Method of evaluation

With regard to each hydrate produced by cooling the raw solutions prepared above, measurement and evaluation of supercooling inhibitive ability, quantity of latent heat and ratio of quantity of latent heat as shown below are made. Through this measurement and evaluation, it is possible to find a preferable range of a concentration by weight of tetra-iso-pentylammonium bromide (ratio by weight of tetra-iso-pentylammonium bromide (hereinafter referred to as "adition ratio of TiPAB") as the case may be) to be added to the aqueous solution of tetra-n-butylammonium) at which a high supercooling inhibitive effect is obtained and a reduction in the quantity of latent heat at temperature range from 3 to 15°C is small.
(1) Supercooling inhibitive ability

The raw solution prepared in the above manner is cooled at 3°C for 24 hours to examine whether or not crystals of the hydrate is created. If the hydrate crystals are created, this is estimated to be that the supercooling inhibitive ability or supercooling inhibitive effect is observed. Moreover, this raw solution is cooled to 3°C to generate a hydrate and then, the solution is heated to 40°C to melt the hydrate produced by heating. When this operation including cooling or coagulation and melting is repeated 1000 times and a reduction in supercooling inhibitive ability is not observed, this is estimated to be that the supercooling inhibitive ability is not deteriorated or the supercooling inhibitive effect is durably maintained.
(2) Quantity of latent heat and latent heat ratio The raw solution prepared in the above manner is subjected to a differential scanning calorimeter (DSC) to measure the quantity of latent heat. The raw solution prepared in the above manner is heated and cooled in the following procedures to measure the quantity of heat when a solid phase material produced by cooling is melted, at a temperature range from 3 to 15°C to thereby find the quantity of latent heat. The quantity of latent heat so-called here means thermal energy corresponding to latent heat at a temperature range from 3 to 15°C.

1) The sample is heated to 15°C at a heating rate of +5°C/min and kept at 15°C for 5 minutes.
2) The sample is cooled from 15°C to 3°C at a cooling rate of -5°C/min and kept at 3°C for 5 minutes.
3) The sample is heated from 3°C to 15°C at a heating rate of +5°C/min and kept at 15°C for 5 minutes.

Raw solutions obtained by adding tetra-iso-pentylammonium bromide in different concentrations by weight to an aqueous solution of tetra-n-butylammonium bromide prepared in a certain concentration are cooled to produce hydrates. The quantity of melt latent heat of each hydrate at temperature range from 3 to 15°C is measured using DSC. The quantity of latent heat at the concentration of TiPAB showing the highest quantity of latent heat is set to 1 and the ratio of each quantity of latent heat at other TiPAB concentrations by weight to the highest quantity of latent heat is defined as latent heat ratio, to evaluate a variation in the quantity of latent heat when the concentration by weight of tetra-iso-pentylammonium bromide is changed, based on the latent heat ratio.

### C. Results of measurement and evaluation

### (1) 40.5 wt% aqueous solution of tetra-n-butylammonium bromide

An aqueous solution for forming a hydrate is prepared by adding tetra-iso-pentylammonium bromide to an aqueous solution (aqueous harmonic solution) having the concentration (40.5% by weight) providing harmonic melting point to tetra-n-butylammonium bromide. To mention in more detail, plural raw solutions differing in the ratio (wt%) of the weight of tetra-iso-pentylammonium bromide to the weight of the aqueous solution of tetra-n-butylammonium bromide(concentration of TiPAB) were prepared. Each raw solution prepared in this manner was then subjected to a test including the measurement and evaluation described in the above (1) and (2). The results are shown in Table 1.

The case where the supercooling inhibitive effect or supercooling inhibitive ability was observed and no deterioration in these characteristics was found after coagulation and melting were repeated 1000 times was rated as "Good". The case where supercooling was not removed so that no hydrate crystal was produced, that is, the case where the supercooling inhibitive effect or supercooling inhibitive ability was not observed and a deterioration in these characteristics was found was rated as "Bad". The case where the supercooling inhibitive effect or supercooling inhibitive ability was partly observed was rated as "Fair".

Also, in the case where supercooling was not removed so that no hydrate crystal was produced, the quantity of heat could not be measured.

**Table 1 40.5 wt% aqueous solution of tetra-n-butylammonium bromide**

| Concentration of TiPAB (%) | 0 | 0.05 | 0.1 | 0.25 | 0.5 | 2 | 5 |
|---|---|---|---|---|---|---|---|
| Supercooling inhibitive ability | Bad | Bad | Good | Good | Good | Good | Good |
| Quantity of latent heat (J/g) | - | - | 151 | 169 | 174 | 144 | 119 |
| Latent heat ratio | - | - | 0.87 | 0.97 | 1 | 0.83 | 0.68 |

From the results shown in Table 1, the following fact is found.
<a> With regard to 40.5 wt% aqueous solution of tetra-n-butylammonium bromide, the supercooling effect is not obtained when the concentration of TiPAB is less than 0.1% by weight.
<b> With regard to 40.5 wt% aqueous solution of tetra-n-butylammonium bromide, the quantity of latent heat is a maximum when the concentration of TiPAB is 0.5% by weight. When the concentration of TiPAB exceeds 2.0% by weight, the latent heat ratio is reduced and exceeds the practical tolerance limits of variation (20%) where the hydrate is used for a heat storage agent or its major component.

As a result of the above <b>, that is, the result that a drop in the quantity of latent heat at a temperature range from 3 to 15°C is dependent on the concentration of TiPAB cannot be inferred from conventional teachings. In light of this, studies have been made as to the reason why the quantity of latent heat is reduced.

The results of DSC measurement were examined, and as a result, the following fact was clarified. When the concentration of TiPAB exceeds 2.0% by weight, there is a tendency that the range in which latent heat is observed is shifted to the high-temperature side. It is inferred that this phenomenon is the reason of the reduction in the quantity of latent heat at a temperature range from 3 to 15°C when the concentration of TiPAB exceeds 2.0% by weight.

The above results will permit of the description that if the concentration of TiPAB is 0.1% by weight or more and 2.0% by weight or less when tetra-iso-pentylammonium bromide is added to the 40.5 wt% aqueous solution of tetra-n-butylammonium bromide, the supercooling inhibitive ability is superior and the quantity of latent heat measured at a temperature range from 3 to 15°C falls within the practical tolerance limits of variation (variation in latent heat ratio is 20% or less).

### (2) 35 wt% aqueous solution of tetra-n-butylammonium bromide

Plural raw solutions prepared by adding tetra-iso-pentylammonium bromide to 35 wt% aqueous solution of tetra-n-butylammonium bromide were subjected to a test including the measurement and evaluation described in the above (1) and (2). The results are shown in Table 2. The meanings of concentration of TiPAB, and "Good", "Bad" and "Fair" in Table 2 are the same as those in Table 1.

**Table 2 35 wt% aqueous solution of tetra-n-butylammonium bromide**

| Concentration of TiPAB (%) | 0 | 0.05 | 0.1 | 0.25 | 0.5 | 2 | 5 |
|---|---|---|---|---|---|---|---|
| Supercooling inhibitive ability | Bad | Bad | Good | Good | Good | Good | Good |
| Quantity of latent heat (J/g) | - | - | 192 | 218 | 213 | 185 | 141 |
| Latent heat ratio | - | - | 0.88 | 1 | 0.98 | 0.85 | 0.65 |

From the results shown in Table 2, the following fact is found.
<c> With regard to the 35 wt% aqueous solution of tetra-n-butylammonium bromide, the supercooling effect is not obtained when the concentration of TiPAB is less than 0.1% by weight.
<d> With regard to the 35 wt% aqueous solution of tetra-n-butylammonium bromide, the quantity of latent heat is a maximum when the concentration of TiPAB is 0.25% by weight. When the concentration of TiPAB exceeds 2.0% by weight, the latent heat ratio is remarkably reduced and exceeds the practical tolerance limits of variation (20%).

The above results will permit of the description that if the concentration of TiPAB is 0.1% by weight or more and 2.0% by weight or less when tetra-iso-pentylammonium bromide is added to the 35 wt% aqueous solution of tetra-n-butylammonium bromide, the supercooling inhibitive ability is superior and a reduction in the quantity of latent heat measured at a temperature range from 3 to 15°C falls within the practical tolerance limits of variation (variation in latent heat ratio is 20% or less).

### (3) 30 wt% aqueous solution of tetra-n-butylammonium bromide

Moreover, plural raw solutions prepared by adding tetra-iso-pentylammonium bromide to 30 wt% aqueous solution of tetra-n-butylammonium bromide were subjected to a test including the measurement and evaluation described in the above (1) and (2). The results are shown in Table 3.

The meanings of concentration of TiPAB, and "Good", "Bad" and "Fair" in Table 3 are the same as those in Table 1.

**Table 3 30 wt% aqueous solution of tetra-n-butylammonium bromide**

| Concentration of TiPAB (%) | 0 | 0.05 | 0.1 | 0.25 | 0.5 | 2 | 5 |
|---|---|---|---|---|---|---|---|
| Supercooling inhibitive ability | Bad | Fair | Good | Good | Good | Good | Good |
| Quantity of latent heat (J/g) | - | 70 | 210 | 226 | 225 | 213 | 157 |
| Latent heat ratio | - | 0.31 | 0.93 | 1 | 0.996 | 0.94 | 0.69 |

From the results shown in Table 3, the following fact is found.
<e> With regard to the 30 wt% aqueous solution of tetra-n-butylammonium bromide, the supercooling effect is not obtained when the concentration of TiPAB is less than 0.1% by weight.
<f> With regard to the 30 wt% aqueous solution of tetra-n-butylammonium bromide, the quantity of latent heat is a maximum when the concentration of TiPAB is 0.25% by weight. When the concentration of TiPAB exceeds 2.0% by weight, the latent heat ratio is remarkably reduced and exceeds the practical tolerance limits of variation (20%).

The above results will permit of the description that if the concentration of TiPAB is 0.1% by weight or more and 2.0% by weight or less when tetra-iso-pentylammonium bromide is added to the 30 wt% aqueous solution of tetra-n-butylammonium bromide, the supercooling inhibitive ability is superior and the quantity of latent heat measured at a temperature range from 3 to 15°C falls within the practical tolerance limits of variation (variation in latent heat ratio is 20% or less).

### (4) 25 wt% aqueous solution of tetra-n-butylammonium bromide

Moreover, plural raw solutions prepared by adding tetra-iso-pentylammonium bromide to 25 wt% aqueous solution of tetra-n-butylammonium bromide were subjected to a test including the measurement and evaluation described in the above (1) and (2). The results are shown in Table 4.

The meanings of concentration of TiPAB, and "Good", "Bad" and "Fair" in Table 4 are the same as those in Table 1.

**Table 4 25 wt% aqueous solution of tetra-n-butylammonium bromide**

| Concentration of TiPAB (%) | 0 | 0.05 | 0.1 | 0.25 | 0.5 | 2 | 5 |
|---|---|---|---|---|---|---|---|
| Supercooling inhibitive ability | Bad | Bad | Good | Good | Good | Good | Good |
| Quantity of latent heat (J/g) | - | - | 169 | 183 | 184 | 171 | 146 |
| Latent heat ratio | - | - | 0.92 | 0.99 | 1 | 0.93 | 0.78 |

From the results shown in Table 4, the following fact is found.
<g> With regard to the 25 wt% aqueous solution of tetra-n-butylammonium bromide, the supercooling effect is not obtained when the concentration of TiPAB is less than 0.1% by weight.
<h> With regard to the 25 wt% aqueous solution of tetra-n-butylammonium bromide, the quantity of latent heat is a maximum when the concentration of TiPAB is 0.5% by weight. When the concentration of TiPAB exceeds 2.0% by weight, the latent heat ratio is remarkably reduced and exceeds the practical tolerance limits of variation (20%).

The above results will permit of the description that if the concentration of TiPAB is 0.1% by weight or more and 2.0% by weight or less when tetra-iso-pentylammonium bromide is added to the 25 wt% aqueous solution of tetra-n-butylammonium bromide, the supercooling inhibitive ability is superior and a reduction in the quantity of latent heat measured at a temperature range from 3 to 15°C falls within the practical tolerance limits of variation (variation in latent heat ratio is 20% or less).

### (5) 20 wt% aqueous solution of tetra-n-butylammonium bromide

Moreover, plural raw solutions prepared by adding tetra-iso-pentylammonium bromide to 20 wt% aqueous solution of tetra-n-butylammonium bromide were subjected to a test including the measurement and evaluation described in the above (1) and (2). The results are shown in Table 5.

The meanings of concentration of TiPAB, and "Good", "Bad" and "Fair" in Table 5 are the same as those in Table 1.

**Table 5 20 wt% aqueous solution of tetra-n-butylammonium bromide**

| Concentration of TiPAB (%) | 0 | 0.05 | 0.1 | 0.25 | 0.5 | 2 | 5 |
|---|---|---|---|---|---|---|---|
| Supercooling inhibitive ability | Bad | Fair | Good | Good | Good | Good | Good |
| Quantity of latent heat (J/g) | - | 32 | 146 | 143 | 144 | 135 | 112 |
| Latent heat ratio | - | 0.22 | 1 | 0.98 | 0.99 | 0.93 | 0.77 |

From the results shown in Table 5, the following fact is found.
<i> With regard to the 20 wt% aqueous solution of tetra-n-butylammonium bromide, the supercooling effect is not obtained when the concentration of TiPAB is less than 0.1% by weight.
<j> With regard to the 20 wt% aqueous solution of tetra-n-butylammonium bromide, the quantity of latent heat is a maximum when the concentration of TiPAB is 0.1% by weight. When the concentration of TiPAB exceeds 2.0% by weight, the latent heat ratio is remarkably reduced and exceeds the practical tolerance limits of variation (20%).

The above results will permit of the description that if the concentration of TiPAB is 0.1% by weight or more and 2.0% by weight or less when tetra-iso-pentylammonium bromide is added to the 20 wt% aqueous solution of tetra-n-butylammonium bromide, the supercooling inhibitive ability is superior and a reduction in the quantity of latent heat measured at a temperature range from 3 to 15°C falls within the practical tolerance limits of variation (variation in latent heat ratio is 20% or less).

### (6) 15 wt% aqueous solution of tetra-n-butylammonium bromide

Moreover, plural raw solutions prepared by adding tetra-iso-pentylammonium bromide to 15 wt% aqueous solution of tetra-n-butylammonium bromide were subjected to a test including the measurement and evaluation described in the above (1) and (2). The results are shown in Table 6.

The meanings of concentration of TiPAB, and "Good", "Bad" and "Fair" in Table 6 are the same as those in Table 1.

**Table 6 15 wt% aqueous solution of tetra-n-butylammonium bromide**

| Concentration of TiPAB (%) | 0 | 0.05 | 0.1 | 0.25 | 0.5 | 2 | 5 |
|---|---|---|---|---|---|---|---|
| Supercooling inhibitive ability | Bad | Bad | Good | Good | Good | Good | Good |
| Quantity of latent heat (J/g) | - | - | 105 | 108 | 110 | 101 | 81 |
| Latent heat ratio | - | - | 0.95 | 0.98 | 1 | 0.92 | 0.74 |

From the results shown in Table 6, the following fact is found.
<k> With regard to the 15 wt% aqueous solution of tetra-n-butylammonium bromide, the supercooling effect is not obtained when the concentration of TiPAB is less than 0.1% by weight.
<1> With regard to the 15 wt% aqueous solution of tetra-n-butylammonium bromide, the quantity of latent heat is a maximum when the concentration of TiPAB is 0.5% by weight. When the concentration of TiPAB exceeds 2.0% by weight, the latent heat ratio is remarkably reduced and exceeds the practical tolerance limits of variation (20%).

The above results will permit of the description that if the concentration of TiPAB is 0.1% by weight or more and 2.0% by weight or less when tetra-iso-pentylammonium bromide is added to the 15 wt% aqueous solution of tetra-n-butylammonium bromide, the supercooling inhibitive ability is superior and a reduction in the quantity of latent heat measured at a temperature range from 3 to 15°C falls within the practical tolerance limits of variation (variation in latent heat ratio is 20% or less).

The results of the above (b), (d), (f), (h), (j) and (1), that is, the result that the quantity of latent heat at a temperature range from 3 to 15°C is dependent on the concentration of TiPAB cannot be inferred from conventional teachings.

It may be admitted from the results shown in Tables 1 to 6 that if the concentration of TiPAB is 0.1% by weight or more and 2.0% by weight or less when tetra-iso-pentylammonium bromide is added to the aqueous solution containing 15 wt% to 40.5% by weight of tetra-n-butylammonium bromide solution, the supercooling inhibitive ability is superior and the quantity of latent heat measured at a temperature range from 3 to 15°C falls within the practical tolerance limits of variation (variation in latent heat ratio is 20% or less). 3. Corrosion inhibitor

In the aqueous solution which contains tetra-n-butylammonium bromide as a solute and further contains tetra-iso-pentylammonium bromide added thereto, bromine ions exist and are causes of corrosion of carbon steel and aluminum, and it is therefore preferable to add a corrosion inhibitor.

As the corrosion inhibitor, a deoxidizing type corrosion inhibitor which consumes dissolved oxygen to inhibit corrosion is preferable in the case where the heat storage agent is used in a closed environment, that is, in an environment into which dissolved oxygen is not intruded. Specific examples of such a deoxidizing type corrosion inhibitor include sodium salts or lithium salts of sulfites or thiosulfates. Also, film forming type corrosion inhibitors that form a coating film which prevents corrosion on the surface of a metal to thereby protect the metal from corrosion may be used. Specific examples of these film forming type corrosion inhibitors include sodium salts, potassium salts, calcium salts or lithium salts of polyphosphates, tripolyphosphates, tetrapolyphosphates, disalts of hydrogenphosphates, pyrophosphates or metasilicates. These film forming type corrosion inhibitors may be used in combination with the aforementioned sulfites or thiosulfates which are deoxidizing type corrosion inhibitors to more improve corrosion inhibitive effects.

Moreover, examples of other corrosion inhibitors applicable in a closed environment include nitrites, benzotriazole, hydrazine, erysorbate, ascorbate and saccharides.

When the heat storage agent is used in an atmosphere, bromides or sulfates of zinc, magnesium or calcium may be used as the corrosion inhibitor used under an atmosphere. When at least one type selected from these corrosion inhibitors is added, a hydroxide ion and carbonic acid ion contained in the heat storage agent are bound with a zinc ion, magnesium ion or calcium ion contained in the corrosion inhibitor to form carbonates and hydroxides which are deposited on the surface of the metal to form a film, making it possible to inhibit corrosion, wherein these corrosion inhibitors function as the film forming corrosion inhibitor.

The aforementioned zinc, magnesium or calcium bromide or sulfate is added and at least one type of phosphate selected from sodium, potassium and lithium phosphates is further added to the heat storage agent to bind the phosphoric acid ion with the zinc ion, magnesium ion or calcium ion, thereby forming a phosphate, which is then deposited on the surface of the metal to form a coating film, thereby making possible to inhibit corrosion. Because phosphates of sodium, potassium or lithium have large solubility and it is therefore possible to form a coating film efficiently, thereby limiting corrosion.

A heat storage agent having less corrosiveness without large variations in melting point and in the quantity of accumulating heat can be provided by adding the above corrosion inhibitor thereto.

### <Evaluation of the corrosion inhibitive effect of a corrosion inhibitor>

A corrosion inhibitor was added to a standard raw solution obtained by adding tetra-iso-pentylammonium bromide to a 40.5 wt% aqueous solution of tetra-n-butylammonium bromide in an amount of 0.5% by weight based on the weight of the aqueous tetra-n-butylammonium bromide solution to evaluate corrosion inhibitive effect in a closed environment and in an atmosphere.

### (1) Corrosion test in a closed environment

Each corrosion inhibitor shown in Table 7 was added to the standard raw solution to prepare sample raw solutions (1 to 4). A carbon steel plate and an aluminum plate were dipped in a closed container and kept at 90°C for one week. Then, a reduction in weight was measured to find the rate of corrosion. The results are shown in Table 7.

**Table 7 Results of corrosion test in a closed environment**

| Sample raw solution | Addition ratio of sodium sulfite (ppm) | Addition ratio of sodium polyphosphate (ppm) | Carbon steel corrosion rate (mm/y) | Aluminum corrosion rate (mm/y) |
|---|---|---|---|---|
| 1 | 1000 | None | 0.07 | 0.002 |
| 2 | None | 1000 | 0.06 | 0.001 |
| 3 | 1000 | 1000 | 0.03 | 0.001 |
| 4 | None | None | 0.19 | 0.004 |

When comparing the case of adding sodium sulfite (Sample raw solution 1) with the case of adding no corrosion inhibitor (Sample raw solution 4), the carbon steel corrosion rate of Sample raw solution 4 was 0.19 mm/y whereas that of Sample raw solution 1 was 0.07 mm/y and the aluminum corrosion rate of Sample raw solution 4 was 0.004 mm/y whereas that of Sample raw solution 1 was 0.002 mm/y. In any case, the corrosion rate was decreased to 1/2 or less, and the corrosion inhibitive effect was proved by this results.

Also, when comparing the case of adding sodium polyphosphate (Sample raw solution 2) with the case of adding no corrosion inhibitor (Sample raw solution 4), the carbon steel corrosion rate of Sample raw solution 4 was 0.19 mm/y whereas that of Sample raw solution 2 was 0.06 mm/y and the aluminum corrosion rate of Sample raw solution 4 was 0.004 mm/y whereas that of Sample raw solution 2 was 0.001 mm/y. In any case, the several or more-fold reduction in corrosion rate was confirmed and the corrosion inhibitive effect was proved by these results similarly to the case of adding sodium sulfite.

When comparing the case of adding a combination of sodium sulfite and sodium polyphosphate (Sample raw solution 3) with the case of adding no corrosion inhibitor (Sample raw solution 4), the carbon steel corrosion rate of Sample raw solution 4 was 0.19 mm/y whereas that of Sample raw solution 3 was 0.03 mm/y and the aluminum corrosion rate of Sample raw solution 4 was 0.004 mm/y whereas that of Sample raw solution 3 was 0.001 mm/y. In the case of carbon steel, the corrosion inhibitive effect was higher than that obtained when using each corrosion inhibitive agent independently.

In any case, carbon steel and aluminum both exhibited general corrosion without generation of local corrosion. It was confirmed that the aforementioned other corrosion inhibitors could likewise sufficiently inhibit corrosion.

### (2) Corrosion test in an atmosphere

Each corrosion inhibitor shown in Table 8 was added to the standard raw solution to prepare sample raw solutions (5 to 8). A carbon steel plate and an aluminum plate were dipped in a container which was equipped with a Liebig's condenser and was so designed that the sample raw solution was brought into contact with the air while the solution was prevented from vaporizing, and were kept at 90°C for one week. Then, a reduction in weight was measured to find the rate of corrosion. The results are shown in Table 8.

**Table 8 Results of corrosion test in an atmosphere**

| Sample raw solution | Addition ratio of zinc sulfate (ppm) | Addition ratio sodium polyphosphate (ppm) | Carbon steel corrosion rate (mm/y) | Aluminum corrosion rate (mm/y) |
|---|---|---|---|---|
| 5 | 100 | None | 0.14 | 0.001 |
| 6 | None | 1000 | 0.16 | 0.003 |
| 7 | 100 | 1000 | 0.06 | 0.001 |
| 8 | None | None | 0.35 | 0.007* |

| | | | | |
|---|---|---|---|---|
| * Pitting corrosion occurs | | | | |

When comparing the case of adding zinc sulfate (Sample raw solution 5) with the case of adding no corrosion inhibitor (Sample raw solution 8), the carbon steel corrosion rate of Sample raw solution 8 was 0.35 mm/y whereas that of Sample raw solution 5 was 0.14 mm/y and therefore, the corrosion rate could be reduced to 1/2 or less, to confirm that Sample raw solution 5 had corrosion inhibitive effect. In the case of Sample raw solution 8, the aluminum corrosion rate was 0.007 mm/y and pitting corrosion took place. However, in the case of adding zinc sulfate (Sample raw solution 5), the aluminum corrosion rate was 0.001 mm/y and no pitting corrosion was observed. The several or more-fold reduction in corrosion rate was observed and pitting corrosion was prevented, so that the corrosion inhibitive effect was confirmed.

Also, when comparing the case of adding sodium polyphosphate (Sample raw solution 6) with the case of adding no corrosion inhibitor (Sample raw solution 8), the carbon steel corrosion rate of Sample raw solution 8 was 0.35 mm/y whereas that of Sample raw solution 6 was 0.16 mm/y and the aluminum corrosion rate of Sample raw solution 8 was 0.007 mm/y whereas that of Sample raw solution 6 was 0.003 mm/y. In the case of Sample raw solution 6, pitting corrosion was prevented. In any case, the corrosion rate could be reduced to 1/2 or less like the case of adding zinc sulfate, to confirm corrosion inhibitive effect.

When comparing the case of using a combination of zinc sulfate and sodium polyphosphate (Sample raw solution 7) with the case of adding no corrosion inhibitor (Sample raw solution 8), the carbon steel corrosion rate of Sample raw solution 8 was 0.35 mm/y whereas that of Sample raw solution 7 was 0.06 mm/y and the aluminum corrosion rate of Sample raw solution 8 was 0.007 mm/y whereas that of Sample raw solution 7 was 0.001 mm/y. In the case of Sample raw solution 7, pitting corrosion was prevented. In the case of carbon steel, the corrosion inhibitive effect was higher than that obtained when using each corrosion inhibitive agent independently.

In any case, carbon steel and aluminum both exhibited general corrosion without generation of local corrosion such as pitting corrosion. Because the pitting corrosion leads to the leakage of the heat storage agent in the pipe and container, it is largely effective that pitting corrosion can be limited by adding the corrosion inhibitor. It was also confirmed that the aforementioned other corrosion inhibitors could likewise sufficiently inhibit corrosion.

### 4. Method for preparing an aqueous solution to produce a heat storage agent or its major component

(1) Tetra-iso-pentylammonium bromide or an aqueous tetra-iso-pentylammonium bromide solution is added to an aqueous tetra-n-butylammonium bromide solution having a concentration adjusted to 15% by weight or more and 40.5% by weight or less (harmonic concentration) to prepare an aqueous solution for forming a hydrate or a heat storage agent or its major component. At this time, tetra-iso-pentylammonium bromide or the aqueous tetra-iso-pentylammonium bromide solution is added such that the ratio by weight of tetra-iso-pentylammonium bromide to the aqueous tetra-n-butylammonium bromide solution is 0.1% or more and 2.0% or less. Such a formulation adjustment enables the production of a hydrate which is superior in supercooling inhibitive effect, is reduced in the drop of quantity of latent heat at a temperature range from 3 to 15°C and serves as a heat storage agent or its major component.

The thermal energy corresponding to the latent heat accumulated by a hydrate produced by cooling an aqueous solution for producing the hydrate reaches a maximum when the concentration of the guest molecule in the aqueous solution is the harmonic concentration. Therefore, in order to more increase the quantity of latent heat of the heat storage agent containing the hydrate as its major component, the aqueous solution of tetra-n-butylammonium bromide preferably has the harmonic concentration (40.5% by weight).

If an aqueous tetra-n-butylammonium bromide solution having a concentration less than or exceeding the harmonic concentration is used, the melting point of a hydrate produced by cooling the aqueous solution for forming the hydrate can be made lower than the harmonic melting point.
(2) When tetra-iso-pentylammonium bromide is added as a supercooling agent to the aqueous tetra-n-butylammonium bromide solution, a powder of tetra-iso-pentylammonium bromide may be added or an aqueous solution of tetra-iso-pentylammonium bromide may be added. In order to prepare the aqueous solution for producing a heat storage agent or its major component, an aqueous tetra-n-butylammonium bromide solution and an aqueous tetra-iso-pentylammonium bromide solution may be mixed with each other or water may be added to a mixture of a powder of tetra-n-butylammonium bromide and a powder of tetra-iso-pentylammonium bromide, followed by mixing, or these powders may be poured into water. It is needless to say that in both cases, the same results are obtained.
(3) In order to prevent supercooling of an aqueous tetra-n-butylammonium bromide solution, disodium hydrogenphosphate may be added as a supercooling inhibitor.

A combination of tetra-iso-pentylammonium bromide and disodium hydrogenphosphate used as supercooling inhibitors may be added to thereby prevent supercooling more efficiently. For example, when tetra-iso-pentylammonium bromide is added to an aqueous tetra-n-butylammonium bromide solution, disodium hydrogenphosphate is added to the aqueous solution of tetra-n-butylammonium bromide and combined with tetra-iso-pentylammonium bromide. In this case, the supercooling inhibitive effect is more improved than in the case of adding only tetra-iso-pentylammonium bromide. Therefore, the use of a combination of the both makes it possible not only to obtain the same level of supercooling inhibitive effect but also to reduce a variation in the quantity of latent heat of the hydrate or heat storage agent containing the hydrate as its major component which variation is caused by the addition of tetra-iso-pentylammonium bromide, even if the concentration by weight of tetra-iso-pentylammonium bromide is reduced.

When tetra-iso-pentylammonium bromide is added to the aqueous tetra-n-butylammonium bromide solution in a ratio by weight of 0.1% by weight or more and 2.0% by weight or less to the aqueous tetra-n-butylammonium bromide solution, the amount of disodium hydrogenphosphate to be added is preferably 0.1 to 2.0% by weight based on the aqueous tetra-n-butylammonium bromide solution.
(4) In order to prevent supercooling of an aqueous tetra-n-butylammonium bromide solution, a metal salt of an aliphatic carboxylic acid, for example, sodium stearate or potassium palmitate, may be added as the supercooling inhibitor.

A combination of tetra-iso-pentylammonium bromide and a metal salt of an aliphatic carboxylic acid may be used as the supercooling inhibitor to prevent supercooling more efficiently. For example, when tetra-iso-pentylammonium bromide is added to an aqueous tetra-n-butylammonium bromide solution, a metal salt of an aliphatic carboxylic acid is added to the aqueous solution of tetra-n-butylammonium bromide and combined with tetra-iso-pentylammonium bromide. In this case, the supercooling inhibitive effect is more improved than in the case of adding only tetra-iso-pentylammonium bromide. Therefore, the use of a combination of the both makes it possible not only to obtain the same level of supercooling inhibitive effect but also to reduce a variation in the quantity of latent heat of the hydrate or heat storage agent containing the hydrate as its major component which variation is caused by the addition of tetra-iso-pentylammonium bromide, even if the concentration by weight of tetra-iso-pentylammonium bromide is reduced.

When tetra-iso-pentylammonium bromide is added to the aqueous tetra-n-butylammonium bromide solution in a ratio by weight of 0.1% by weight or more and 2.0% by weight or less to the aqueous tetra-n-butylammonium bromide solution, the amount of the metal salt of an aliphatic carboxylic acid to be added is preferably 0.1 to 2.0% by weight based on the aqueous tetra-n-butylammonium bromide solution.

### (B) Heat storage material containing tri-n-butyl-n-pentylammonium bromide, tetra-iso-pentylammonium bromide and water

1. There will be explained new findings relevant to the present invention. Some aspects of the present invention are based on these new findings.
(1) Tri-n-butyl-n-pentylammonium bromide forms a clathrate hydrate which has a harmonic melting point of about 6°C and the quantity of latent heat at the harmonic melting point is 200 J/g. With regard to a heat storage agent (particularly, a heat storage agent containing the clathrate hydrate as its major component) containing a clathrate hydrate containing tri-n-butyl-n-pentylammonium bromide as the guest molecule, the inventors of the present invention have made studies as to a material and its formulation composition capable of producing and maintaining the effect of preventing or inhibiting supercooling which takes place when cooling a raw solution containing tri-n-butyl-n-pentylammonium bromide as a solute, and as a result, found that it is effective to add tetra-iso-pentylammonium bromide or its aqueous solution as the above material.

Although the patentability of the present invention is not foreseen based on something theoretical, the reason why the supercooling inhibitive effect is produced by adding tetra-iso-pentylammonium bromide to a raw solution containing tri-n-butyl-n-pentylammonium bromide as a solute is estimated as follows.

Specifically, a hydrate of tetra-iso-pentylammonium bromide has a harmonic melting point of 28°C which is sufficiently higher than the melting point of a hydrate produced from a raw solution containing tri-n-butyl-n-pentylammonium bromide as a solute or the melting point of a hydrate of tri-n-butyl-n-pentylammonium bromide. For this reason, when the above raw solution is cooled, a hydrate of tetra-iso-pentylammonium bromide is formed earlier than a hydrate of tri-n-butyl-n-pentylammonium bromide. Then, the hydrate of tetra-iso-pentylammonium bromide becomes a nucleus (product nucleus) which is an opportunity or inducing factor for the formation of the hydrate of tri-n-butyl-n-pentylammonium bromide to produce a hydrate which is to be a major component of the heat storage agent in a short time, with the result that the supercooling is prevented or prohibited. Also, the hydrate of tetra-iso-pentylammonium bromide is an analogue of the hydrate of tri-n-butyl-n-pentylammonium bromide and therefore the both are compatible and have a similar crystal structure, with the result that the supercooling is prevented or prohibited.

Also, because tetra-iso-pentylammonium bromide has isopentyl as the alkyl constituting its molecule, it is less hydrophilic to water in contrast to tetra-n-butylammonium fluoride having n-butyl as the alkyl and it tends to form a clathrate hydrate from the state of an aqueous solution with ease. This tendency brings about the following results. Specifically, when a raw solution prepared by adding tetra-iso-pentylammonium bromide to an aqueous solution of tri-n-butyl-n-pentylammonium bromide is cooled, a hydrate of tetra-iso-pentylammonium bromide is formed more rapidly than in the case where a raw solution prepared by adding tetra-n-butylammonium fluoride to an aqueous solution of tri-n-butyl-n-pentylammonium bromide is cooled to produce a hydrate of tetra-n-butylammonium fluoride, and the hydrate of tetra-iso-pentylammonium bromide becomes a nucleus (product nucleus) which is an opportunity or inducing factor for the formation of the hydrate of tri-n-butyl-n-pentylammonium bromide with the result that the supercooling is prevented or prohibited.

As mentioned above, tetra-iso-pentylammonium bromide tends to form a hydrate more easily than tetra-n-butylammonium fluoride. This implies that tetra-iso-pentylammonium bromide is more effective as a supercooling inhibitor. Also, the amount of tetra-iso-pentylammonium bromide to be added as a supercooling inhibitor to an aqueous solution of tri-n-butyl-n-pentylammonium bromide can be more reduced than in the case of adding tetra-n-butylammonium fluoride as a supercooling inhibitor, ensuring that an adverse influence, caused by the addition of the supercooling inhibitor, on the thermal characteristics of the heat storage agent containing the hydrate as its major component, can be decreased to a minimum.
(2) With regard to the amount of tetra-iso-pentylammonium bromide to be added as a supercooling inhibitor, it is preferable to add tetra-iso-pentylammonium bromide such that the ratio (percentage) by weight of tetra-iso-pentylammonium bromide to the aqueous solution of tri-n-butyl-n-pentylammonium bromide is in a predetermined range. When the ratio is less than the lower limit of the predetermined range, the amount of a hydrate of tetra-iso-pentylammonium bromide is decreased and the hydrate of tetra-iso-pentylammonium bromide scarcely becomes a product nucleus of a hydrate of tri-n-butyl-n-pentylammonium bromide, resulting in insufficient supercooling inhibitive effect. When the ratio exceeds the upper limit of the predetermined range on the other hand, this adversely affects a hydrate produced from an aqueous solution containing tri-n-butyl-n-pentylammonium bromide and tetra-iso-pentylammonium bromide or a hydrate containing tri-n-butyl-n-pentylammonium bromide and tetra-iso-pentylammonium bromide and hence, the quantity of latent heat of a heat storage agent containing the hydrate as its major component, resulting in significant reduction in the quantity of latent heat which can be accumulated at a temperature range from 3 to 15°C.

Therefore, tetra-iso-pentylammonium bromide is added in an appropriate amount (or in a range of proper amount), thereby making it possible to produce the effect of the supercooling agent more exactly or more efficiently while reducing an adverse influence, caused by the addition of the supercooling inhibitor, on the thermal characteristics of the major component of the heat storage agent, to a minimum.
2. Next, the addition of tetra-iso-pentylammonium bromide as a supercooling inhibitor and its effect will be explained in more detail.

### <Method of measurement and evaluation>

### A. Raw solution

Tetra-iso-pentylammonium bromide is added in different concentrations by weight (the ratio by weight of tetra-iso-pentylammonium bromide to be added to an aqueous solution of tri-n-butyl-n-pentylammonium bromide) to the aqueous solution of tri-n-butyl-n-pentylammonium bromide prepared in a certain concentration to prepare aqueous solutions (raw solutions) for forming a hydrate (incidentally, a hydrate produced by cooling this aqueous solution may be used by itself or in the form of a slurry obtained by dispersing or suspending it in an aqueous solution for forming a heat storage agent (particularly, a latent heat storage agent) or as a major component of the heat storage agent). Also, a raw solution in which tetra-iso-pentylammonium bromide is not added to an aqueous solution of tri-n-butyl-n-pentylammonium bromide is prepared.

Because, the quantity of latent heat of a hydrate produced by cooling the aqueous solution of tri-n-butyl-n-pentylammonium bromide reaches a maximum when tri-n-butyl-n-pentylammonium bromide contained in the harmonic concentration, first, a raw solution in which tetra-iso-pentylammonium bromide is added in an aqueous solution of tri-n-butyl-n-pentylammonium bromide having the harmonic concentration (34.1% by weight) is prepared and evaluated. Then, raw solutions in which tetra-iso-pentylammonium bromide added to aqueous solutions of tri-n-butyl-n-pentylammonium bromide having concentrations of 30% by weight to 15% by weight are also prepared and evaluated.

### B. Method of evaluation

With regard to each hydrate produced by cooling the raw solutions prepared above, measurement and evaluation of supercooling inhibitive ability, quantity of latent heat and latent heat ratio as shown below are made. Through this measurement and evaluation, it is possible to find a preferable range of a concentration by weight of tetra-iso-pentylammonium bromide (ratio by weight of tetra-iso-pentylammonium bromide to the aqueous solution of tri-n-butyl-n-pentylammonium bromide)(hereinafter referred to as "concentration by weight of TiPAB") as the case may be) to be added to the aqueous solution of tri-n-butyl-n-pentylammonium bromide at which a high supercooling inhibitive effect is obtained and a reduction in the quantity of latent heat at temperature range from 3 to 15°C is small.
(1) Supercooling inhibitive ability

The raw solution prepared in the above manner was cooled at 3°C for 24 hours to examine whether or not crystals of the hydrate were produced. If the hydrate crystals are produced, this is estimated to be that the supercooling inhibitive ability or supercooling inhibitive effect is observed. Moreover, this raw solution is cooled to 3°C to generate a hydrate and then, the solution is heated to 40°C to melt the hydrate produced by heating. When this operation including cooling or coagulation and melting is repeated 1000 times and a reduction in supercooling inhibitive ability is not observed, this is estimated to be that the supercooling inhibitive ability is not deteriorated or the supercooling inhibitive effect is durably maintained.
(2) Quantity of latent heat and ratio of quantity of heat The raw solution prepared in the above manner is subjected to a differential scanning calorimeter (DSC) to measure the quantity of latent heat. The raw solution prepared in the above manner is heated and cooled in the following procedures to measure the quantity of heat when a solid phase material produced by cooling is melted, at a temperature range from 3 to 15°C to thereby find the quantity of latent heat. The quantity of latent heat so-called here means thermal energy corresponding to latent heat at a temperature range from 3 to 15°C.

1) The sample is heated to 15°C at a heating rate of +5°C/min and kept at 15°C for 5 minutes.
2) The sample is cooled from 15°C to 3°C at a cooling rate of -5°C/min and kept at 3°C for 5 minutes.
3) The sample is heated from 3°C to 15°C at a heating rate of +5°C/min and kept at 15°C for 5 minutes.

Raw solutions obtained by adding tetra-iso-pentylammonium bromide in different concentrations by weight to an aqueous solution of tri-n-butyl-n-pentylammonium bromide prepared in a certain concentration are cooled to produce hydrates. The quantity of melt latent heat of each hydrate at temperature range from 3 to 15°C is measured using DSC. The quantity of latent heat at the concentration of TiPAB showing the highest quantity of latent heat is set to 1 and the ratio of each quantity of latent heat at other TiPAB concentrations by weight to the highest quantity of latent heat is defined as latent heat ratio, to evaluate a variation in the quantity of latent heat when the concentration by weight of tetra-iso-pentylammonium bromide is changed, based on the latent heat ratio.

### C. Results of measurement and evaluation

### (1) 34.1 wt% aqueous solution of tri-n-butyl-n-pentylammonium bromide

Tetra-iso-pentylammonium bromide was added to an aqueous solution (aqueous harmonic solution) having the concentration (34.1% by weight) providing the harmonic melting point of tri-n-butyl-n-pentylammonium bromide to prepare an aqueous solution for forming a hydrate. To mention in more detail, plural raw solutions differing in the ratio (wt%) (concentration by weight of TiPAB) of tetra-iso-pentylammonium bromide to the aqueous solution of tri-n-butyl-n-pentylammonium bromide were prepared. Each raw solution prepared in this manner was then subjected to a test including the measurement and evaluation described in the above (1) and (2). The results are shown in Table 9.

The case where the supercooling inhibitive effect or supercooling inhibitive ability was observed and no deterioration in these characteristics was found after coagulation and melting were repeated 1000 times was rated as "Good". The case where supercooling was not removed so that no hydrate crystal was produced, that is, the case where the supercooling inhibitive effect or supercooling inhibitive ability was not observed and a deterioration in these characteristics was found was rated as "Bad".

Also, in the case where supercooling was not removed so that no hydrate crystal was produced, the quantity of heat could not be measured.

**Table 9 34.1 wt% aqueous solution of tri-n-butyl-n-pentylammonium bromide**

| Concentration of TiPAB (%) | 0 | 0.25 | 0.5 | 1 | 1.5 | 2 | 5 | 8 |
|---|---|---|---|---|---|---|---|---|
| Supercooling inhibitive ability | Bad | Good | Good | Good | Good | Good | Good | Good |
| Quantity of latent heat (J/g) | - | 208 | 212 | 196 | 198 | 186 | 174 | 138 |
| Latent heat ratio | - | 0.98 | 1.00 | 0.92 | 0.93 | 0.88 | 0.82 | 0.65 |

From the results shown in Table 9, the following fact is found.
<a> With regard to the 34.1 wt% aqueous solution of tri-n-butyl-n-pentylammonium bromide, the supercooling effect is not obtained when the concentration of TiPAB is less than 0.25% by weight.
<b> With regard to the 34.1 wt% aqueous solution of tri-n-butyl-n-pentylammonium bromide, the quantity of latent heat is a maximum when the concentration of TiPAB is 0.5% by weight. When the concentration of TiPAB exceeds 5.0% by weight, the latent heat ratio is reduced and exceeds the practical tolerance limits of variation (20%) when the hydrate is used for a heat storage agent or its major component.

As a result of the above <b>, that is, the result that the quantity of latent heat at a temperature range from 3 to 15°C is dependent on the concentration of TiPAB cannot be inferred from conventional teachings. In light of this, studies have been made as to the reason why the quantity of latent heat is reduced.

The results of DSC measurement were examined, and as a result, the following fact was clarified. When the concentration of TiPAB exceeds 5.0% by weight, there is a tendency that the range in which latent heat is observed is shifted to the high-temperature side. It is inferred that this phenomenon is the reason of the reduction in the quantity of latent heat at a temperature range from 3 to 15°C when the concentration of TiPAB exceeds 5.0% by weight.

The above results will permit of the description that if the concentration of TiPAB is 0.25% by weight or more and 5.0% by weight or less when tetra-iso-pentylammonium bromide is added to the 34.1 wt% aqueous solution of tri-n-butyl-n-pentylammonium bromide, the supercooling inhibitive ability is superior and the quantity of latent heat measured at a temperature range from 3 to 15°C falls within the practical tolerance limits of variation (variation in latent heat ratio is 20% or less).

### (2) 30 wt% aqueous solution of tri-n-butyl-n-pentylammonium bromide

Plural raw solutions prepared by adding tetra-iso-pentylammonium bromide to an 30 wt% aqueous solution of tri-n-butyl-n-pentylammonium bromide were subjected to a test including the measurement and evaluation described in the above (1) and (2). The results are shown in Table 10.

The meanings of concentration of TiPAB, and "Good" and "Bad" in Table 10 are the same as those in Table 9.

**Table 10 30 wt% aqueous solution of tri-n-butyl-n-pentylammonium bromide**

| Concentration of TiPAB (%) | 0 | 0.25 | 0.5 | 1 | 1.5 | 2 | 5 | 8 |
|---|---|---|---|---|---|---|---|---|
| Supercooling inhibitive ability | Bad | Good | Good | Good | Good | Good | Good | Good |
| Quantity of latent heat (J/g) | - | 215 | 209 | 210 | 201 | 202 | 185 | 157 |
| Latent heat ratio | - | 1.00 | 0.97 | 0.97 | 0.93 | 0.94 | 0.86 | 0.73 |

From the results shown in Table 10, the following fact is found.
<c> With regard to the 30 wt% aqueous solution of tri-n-butyl-n-pentylammonium bromide, the supercooling effect is not obtained when the concentration of TiPAB is less than 0.25% by weight.
<d> With regard to the 30 wt% aqueous solution of tri-n-butyl-n-pentylammonium bromide, the quantity of latent heat is a maximum when the concentration of TiPAB is 0.25% by weight. When the concentration of TiPAB exceeds 5.0% by weight, the latent heat ratio is remarkably reduced and exceeds the practical tolerance limits of variation (20%).

The above results will permit of the description that if the concentration of TiPAB is 0.25% by weight or more and 5.0% by weight or less when tetra-iso-pentylammonium bromide is added to the 30 wt% aqueous solution of tri-n-butyl-n-pentylammonium bromide, the supercooling inhibitive ability is superior and a reduction in the quantity of latent heat measured at a temperature range from 3 to 15°C falls within the practical tolerance limits of variation (variation in latent heat ratio is 20% or less).

### (3) 25 wt% aqueous solution of tri-n-butyl-n-pentylammonium bromide

Moreover, plural raw solutions prepared by adding tetra-iso-pentylammonium bromide to 25 wt% aqueous solution of tri-n-butyl-n-pentylammonium bromide were subjected to a test including the measurement and evaluation described in the above (1) and (2). The results are shown in Table 11.

The meanings of concentration of TiPAB, and "Good" and "Bad" in Table 11 are the same as those in Table 9.

**Table 11 25 wt% aqueous solution of tri-n-butyl-n-pentylammonium bromide**

| Concentration of TiPAB (%) | 0 | 0.25 | 0.5 | 1 | 1.5 | 2 | 5 | 8 |
|---|---|---|---|---|---|---|---|---|
| Supercooling inhibitive ability | Bad | Good | Good | Good | Good | Good | Good | Good |
| Quantity of latent heat (J/g) | - | 168 | 172 | 167 | 161 | 162 | 149 | 127 |
| Latent heat ratio | - | 0.98 | 1.00 | 0.97 | 0.94 | 0.94 | 0.87 | 0.74 |

From the results shown in Table 11, the following fact is found.
<e> With regard to the 25 wt% aqueous solution of tri-n-butyl-n-pentylammonium bromide, the supercooling effect is not obtained when the concentration of TiPAB is less than 0.25% by weight.
<f> With regard to the 25 wt% aqueous solution of tri-n-butyl-n-pentylammonium bromide, the quantity of latent heat is a maximum when the concentration of TiPAB is 0.5% by weight. When the concentration of TiPAB exceeds 5.0% by weight, the latent heat ratio is remarkably reduced and exceeds the practical tolerance limits of variation (20%).

The above results will permit of the description that if the concentration of TiPAB is 0.25% by weight or more and 5.0% by weight or less when tetra-iso-pentylammonium bromide is added to the 25 wt% aqueous solution of tri-n-butyl-n-pentylammonium bromide, the supercooling inhibitive ability is superior and a reduction in the quantity of latent heat measured at a temperature range from 3 to 15°C falls within the practical tolerance limits of variation (variation in latent heat ratio is 20% or less).

### (4) 20 wt% aqueous solution of tri-n-butyl-n-pentylammonium bromide

Moreover, plural raw solutions prepared by adding tetra-iso-pentylammonium bromide to 20 wt% aqueous solution of tri-n-butyl-n-pentylammonium bromide were subjected to a test including the measurement and evaluation described in the above (1) and (2). The results are shown in Table 12.

The meanings of concentration of TiPAB, and "Good" and "Bad" in Table 12 are the same as those in Table 9.

**Table 12 20 wt% of aqueous solution of tri-n-butyl-n-pentylammonium bromide**

| Concentration of TiPAB (%) | 0 | 0.25 | 0.5 | 1 | 1.5 | 2 | 5 | 8 |
|---|---|---|---|---|---|---|---|---|
| Supercooling inhibitive ability | Bad | Bad | Good | Good | Good | Good | Good | Good |
| Quantity of latent heat (J/g) | - | - | 124 | 120 | 125 | 122 | 113 | 96 |
| Latent heat ratio | - | - | 1.00 | 0.96 | 1.00 | 0.98 | 0.91 | 0.77 |

From the results shown in Table 12, the following fact is found.
<g> With regard to the 20 wt% aqueous solution of tri-n-butyl-n-pentylammonium bromide, the supercooling effect is not obtained when the concentration of TiPAB is less than 0.5% by weight.
<h> With regard to the 20 wt% aqueous solution of tri-n-butyl-n-pentylammonium bromide, the quantity of latent heat is a maximum when the concentration of TiPAB is 1.5% by weight. When the concentration of TiPAB exceeds 5.0% by weight, the latent heat ratio is remarkably reduced and exceeds the practical tolerance limits of variation (20%).

The above results will permit of the description that if the concentration of TiPAB is 0.5% by weight or more and 5.0% by weight or less when tetra-iso-pentylammonium bromide is added to the 20 wt% aqueous solution of tri-n-butyl-n-pentylammonium bromide, the supercooling inhibitive ability is superior and a reduction in the quantity of latent heat measured at a temperature range from 3 to 15°C falls within the practical tolerance limits of variation (variation in latent heat ratio is 20% or less).

### (5) 15 wt% aqueous solution of tri-n-butyl-n-pentylammonium bromide

Moreover, plural raw solutions prepared by adding tetra-iso-pentylammonium bromide to 15 wt% aqueous solution of tri-n-butyl-n-pentylammonium bromide were subjected to a test including the measurement and evaluation described in the above (1) and (2). The results are shown in Table 13.

The meanings of concentration of TiPAB, and "Good" and "Bad" in Table 13 are the same as those in Table 9.

**Table 13 15 wt% aqueous solution of tri-n-butyl-n-pentylammonium bromide**

| Concentration of TiPAB (%) | 0 | 0.25 | 0.5 | 1 | 1.5 | 2 | 5 | 8 |
|---|---|---|---|---|---|---|---|---|
| Supercooling inhibitive ability | Bad | Bad | Good | Good | Good | Good | Good | Good |
| Quantity of latent heat (J/g) | - | - | 89 | 91 | 92 | 92 | 88 | 61 |
| Latent heat ratio | - | - | 0.97 | 0.99 | 0.99 | 1.00 | 0.96 | 0.66 |

From the results shown in Table 13, the following fact is found.
<i> With regard to the 15 wt% aqueous solution of tri-n-butyl-n-pentylammonium bromide, the supercooling effect is not obtained when the concentration of TiPAB is less than 0.5% by weight.
<j> With regard to the 15 wt% aqueous solution of tri-n-butyl-n-pentylammonium bromide, the quantity of latent heat is a maximum when the concentration of TiPAB is 2.0% by weight. When the concentration of TiPAB exceeds 5.0% by weight, the latent heat ratio is remarkably reduced and exceeds the practical tolerance limits of variation (20%).

The above results will permit of the description that if the concentration of TiPAB is 0.5% by weight or more and 5.0% by weight or less when tetra-iso-pentylammonium bromide is added to the 15 wt% aqueous solution of tri-n-butyl-n-pentylammonium bromide, the supercooling inhibitive ability is superior and a reduction in the quantity of latent heat measured at a temperature range from 3 to 15°C falls within the practical tolerance limits of variation (variation in latent heat ratio is 20% or less).

The results of the above (b), (d), (f), (h) and (j), that is, the result that the quantity of latent heat at a temperature range from 3 to 15°C is dependent on the concentration of TiPAB cannot be inferred from conventional teachings.

It may be admitted from the results shown in Tables 9 to 13 that if the concentration of TiPAB is 0.5% by weight or more and 5.0% by weight or less when tetra-iso-pentylammonium bromide is added to the aqueous solution containing 15 wt% or more to 40% by weight or less of tri-n-butyl-n-pentylammonium bromide solution, the supercooling inhibitive ability is superior and a reduction in the quantity of latent heat measured at a temperature range from 3 to 15°C falls within the practical tolerance limits of variation (variation in latent heat ratio is 20% or less). 3. Corrosion inhibitor

In the aqueous solution which contains tri-n-butyl-n-pentylammonium bromide as a solute and further contains tetra-iso-pentylammonium bromide added thereto, bromine ions exist and are causes of corrosion of carbon steel and aluminum, and it is therefore preferable to add a corrosion inhibitor.

As the corrosion inhibitor, a deoxidizing type corrosion inhibitor which consumes dissolved oxygen to inhibit corrosion is preferable in the case where the heat storage agent is used in a closed environment, that is, in an environment into which dissolved oxygen is not intruded. Specific examples of such a deoxidizing type corrosion inhibitor include sodium salts or lithium salts of sulfites or thiosulfates. Also, film forming type corrosion inhibitors that form a coating film preventing corrosion on the surface of a metal to thereby protect the metal from corrosion may be used. Specific examples of these film forming type corrosion inhibitors include sodium salts, potassium salts, calcium salts or lithium salts of polyphosphates, tripolyphosphates, tetrapolyphosphates, disalts of hydrogenphosphates, pyrophosphates or metasilicates. These film forming type corrosion inhibitors may be used in combination with the aforementioned sulfites or thiosulfates which are deoxidizing type corrosion inhibitors to more improve corrosion inhibitive effects.

Moreover, examples of other corrosion inhibitors applicable in a closed environment include nitrites, benzotriazole, hydrazine, erysorbate, ascorbate and saccharides.

When the heat storage agent is used in an atmosphere, bromides or sulfates of zinc, magnesium or calcium may be used as the corrosion inhibitor used under an atmosphere. When at least one type selected from these corrosion inhibitors is added, a hydroxide ion and carbonic acid ion contained in the aqueous solution of heat storage agent are bound with a zinc ion, magnesium ion or calcium ion contained in the corrosion inhibitor to form carbonates and hydroxides which are deposited on the surface of the metal to form a film, thereby making it possible to inhibit corrosion, wherein these corrosion inhibitors function as the film forming corrosion inhibitor.

The aforementioned bromide or sulfate of zinc, magnesium or calcium is added and at least one type of phosphate selected from sodium, potassium and lithium phosphates is further added to the heat storage agent to bind the phosphoric acid ion with the zinc ion, magnesium ion or calcium ion, thereby forming a phosphate, which is then deposited on the surface of the metal to form a coating film, thereby making possible to inhibit corrosion. Because phosphates of sodium, potassium or lithium have large solubility and it is therefore possible to form a coating film efficiently, thereby inhibiting corrosion.

A heat storage agent having less corrosiveness without large variations in melting point and in the quantity of accumulating heat can be provided by adding the above-described corrosion inhibitor thereto.

### <Evaluation of the corrosion inhibitive effect of a corrosion inhibitor>

A corrosion inhibitor was added to a standard raw solution obtained by adding tetra-iso-pentylammonium bromide to 34.1 wt% aqueous solution of tri-n-butyl-n-pentylammonium bromide in an amount of 0.5% by weight based on the weight of the aqueous solution of tri-n-butyl-n-pentylammonium bromide to evaluate corrosion inhibitive effect in a closed environment and in an atmosphere.

### (1) Corrosion test in a closed environment

Each corrosion inhibitor shown in Table 14 was added to the standard raw solution to prepare sample raw solutions (9 to 12). A carbon steel plate and an aluminum plate were dipped in a closed container and kept at 90°C for one week. Then, a reduction in weight was measured to find the rate of corrosion. The results are shown in Table 14.

**Table 14 Results of corrosion test in a closed environment**

| Sample raw solution | Addition ratio of sodium sulfite (ppm) | Addition ratio of sodium polyphosphate (ppm) | Carbon steel corrosion rate (mm/y) | Aluminum corrosion rate (mm/y) |
|---|---|---|---|---|
| 9 | 1000 | None | 0.06 | 0.001 |
| 10 | None | 1000 | 0.06 | 0.001 |
| 11 | 1000 | 1000 | 0.04 | 0.001 |
| 12 | None | None | 0.19 | 0.004 |

When comparing the case of adding sodium sulfite (Sample raw solution 9) with the case of adding no corrosion inhibitor (Sample raw solution 12), the carbon steel corrosion rate of Sample raw solution 12 was 0.19 mm/y whereas that of Sample raw solution 9 was 0.06 mm/y. The aluminum corrosion rate of Sample raw solution 12 was 0.004 mm/y whereas that of Sample raw solution 9 was 0.001 mm/y. In any case, the corrosion rate could be reduced to 1/3 or less and corrosion inhibitive effect was observed.

Also, when comparing the case of adding sodium polyphosphate (Sample raw solution 10) with the case of adding no corrosion inhibitor (Sample raw solution 12), the carbon steel corrosion rate of Sample raw solution 12 was 0.19 mm/y whereas that of Sample raw solution 10 was 0.06 mm/y. The aluminum corrosion rate of Sample raw solution 12 was 0.004 mm/y whereas that of Sample raw solution 10 was 0.001 mm/y. In any case, the corrosion rate could be reduced to 1/3 or less and the corrosion inhibitive effect was proved by these results in the same manner as the case of adding sodium sulfite.

When comparing the case of adding a combination of sodium sulfite and sodium polyphosphate (Sample raw solution 11) with the case of adding no corrosion inhibitor (Sample raw solution 12), the carbon steel corrosion rate of Sample raw solution 12 was 0.19 mm/y whereas that of Sample raw solution 11 was 0.04 mm/y. The aluminum corrosion rate of Sample raw solution 12 was 0.004 mm/y whereas that of Sample raw solution 11 was 0.001 mm/y. In the case of carbon steel, the corrosion inhibitive effect was higher than that obtained when using each corrosion inhibitive agent independently.

In any case, carbon steel and aluminum both exhibited general corrosion without generation of local corrosion such as pitting corrosion. It was also confirmed that the aforementioned other corrosion inhibitors had the ability to sufficiently inhibit corrosion.

### (2) Corrosion test in an atmosphere

Each corrosion inhibitor shown in Table 15 was added to the standard raw solution to prepare sample raw solutions (13 to 16). A carbon steel plate and an aluminum plate were dipped in a container which was equipped with a Liebig's condenser and was so designed that the sample raw solution was brought into contact with the air while the solution was prevented from vaporizing, and were kept at 90°C for one week. Then, a reduction in weight was measured to find the rate of corrosion. The results are shown in Table 15.

**Table 15 Results of corrosion test in an atmosphere**

| Sample raw solution | Addition ratio of zinc sulfate (ppm) | Addition ratio of sodium polyphosphate (ppm) | Carbon steel corrosion rate (mm/y) | Aluminum corrosion rate (mm/y) |
|---|---|---|---|---|
| 13 | 100 | None | 0.13 | 0.002 |
| 14 | None | 1000 | 0.16 | 0.003 |
| 15 | 100 | 1000 | 0.05 | 0.001 |
| 16 | None | None | 0.34 | 0.007* |

| | | | | |
|---|---|---|---|---|
| * Pitting corrosion occurs | | | | |

When comparing the case of adding zinc sulfate (Sample raw solution 13) with the case of adding no corrosion inhibitor (Sample raw solution 16), the carbon steel corrosion rate of Sample raw solution 16 was 0.34 mm/y whereas that of Sample raw solution 13 was 0.13 mm/y. The corrosion rate was reduced to 1/2 or less and the corrosion inhibitive effect was observed. The aluminum corrosion rate of Sample raw solution 16 was 0.007 mm/y and pitting corrosion was generated whereas when zinc sulfate was added (Sample raw solution 13), the corrosion rate was 0.002 mm/y, no pitting corrosion was observed and the corrosion rate could be reduced to 1/3. Namely, the addition of zinc sulfate inhibited pitting corrosion and produced corrosion inhibitive effect.

Also, when comparing the case of adding sodium polyphosphate (Sample raw solution 14) with the case of adding no corrosion inhibitor (Sample raw solution 16), the carbon steel corrosion rate of Sample raw solution 16 was 0.34 mm/y whereas that of Sample raw solution 14 was 0.16 mm/y, and the aluminum corrosion rate of Sample raw solution 16 was 0.007 mm/y whereas that of Sample raw solution 14 was 0.003 mm/y and pitting corrosion was prevented. In any case, the corrosion rate could be reduced to 1/2 or less and the corrosion inhibitive effect was proved by these results.

When comparing the case of adding a combination of zinc sulfate and sodium polyphosphate (Sample raw solution 15) with the case of adding no corrosion inhibitor (Sample raw solution 16), the carbon steel corrosion rate of Sample raw solution 16 was 0.34 mm/y whereas that of Sample raw solution 15 was 0.05 mm/y, and the aluminum corrosion rate of Sample raw solution 16 was 0.007 mm/y whereas that of Sample raw solution 15 was 0.001 mm/y and pitting corrosion was prevented. In the case of carbon steel, the corrosion inhibitive effect was higher than that obtained when using each corrosion inhibitive agent independently.

In any case, carbon steel and aluminum both exhibited general corrosion without generation of local corrosion such as pitting corrosion. Especially, pitting corrosion leads to leakages of the heat storage material inside of pipes and a container and therefore, it is a large effect that pitting corrosion can be inhibited by the addition of the corrosion inhibitive agent. It was also confirmed that the aforementioned other corrosion inhibitors had the ability to sufficiently inhibit corrosion.

### 4. Method for preparing an aqueous solution to produce a heat storage agent or its major component

(1) Tetra-iso-pentylammonium bromide or an aqueous tetra-iso-pentylammonium bromide solution is added to an aqueous solution of tri-n-butyl-n-pentylammonium bromide having a concentration adjusted to 15% by weight or more and 34.1% by weight or less (harmonic concentration) to prepare an aqueous solution for forming a hydrate or a heat storage agent or its major component. At this time, tetra-iso-pentylammonium bromide or the aqueous tetra-iso-pentylammonium bromide solution is added such that the ratio by weight of tetra-iso-pentylammonium bromide to the aqueous solution of tri-n-butyl-n-pentylammonium bromide is 0.5% or more and 5.0% or less. Such a formulation adjustment enables the production of a hydrate which is superior in supercooling inhibitive effect, is reduced in the drop of quantity of latent heat at a temperature range from 3 to 15°C and serves as a heat storage agent or its major component.

The thermal energy corresponding to the latent heat accumulated by a hydrate produced by cooling an aqueous solution for producing the hydrate reaches a maximum when the concentration of the guest molecule in the aqueous solution is the harmonic concentration. Therefore, in order to more increase the quantity of latent heat of the heat storage agent containing the hydrate as its major component, the aqueous solution of tri-n-butyl-n-pentylammonium bromide preferably has the harmonic concentration (34.1% by weight).

If an aqueous solution of tri-n-butyl-n-pentylammonium bromide having a concentration less than or exceeding the harmonic concentration is used, the melting point of a hydrate produced by cooling the aqueous solution for forming the hydrate can be made lower than the harmonic melting point.
(2) When tetra-iso-butylammonium bromide is added as a supercooling agent to the aqueous solution of tri-n-butyl-n-pentylammonium bromide, a powder of tetra-iso-pentylammonium bromide or an aqueous solution of tetra-iso-pentylammonium bromide may be added. In order to prepare the aqueous solution for producing a heat storage agent or its major component, an aqueous solution of tri-n-butyl-n-pentylammonium bromide and an aqueous tetra-iso-pentylammonium bromide solution may be mixed with each other or water may be added to a mixture of a powder of tri-n-butyl-n-pentylammonium bromide and a powder of tetra-iso-pentylammonium bromide, followed by mixing, or these powders may be added into water. It is needless to say that in both cases, the same results are obtained.
(3) In order to prevent supercooling of an aqueous solution of tri-n-butyl-n-pentylammonium bromide, disodium hydrogenphosphate may be added as a supercooling inhibitor.

A combination of tetra-iso-pentylammonium bromide and disodium hydrogenphosphate used as supercooling inhibitors may be added to thereby prevent supercooling more efficiently. For example, when tetra-iso-pentylammonium bromide is added to an aqueous solution of tri-n-butyl-n-pentylammonium bromide, disodium hydrogenphosphate is added to the aqueous solution of tri-n-butyl-n-pentylammonium bromide and combined with tetra-iso-pentylammonium bromide. In this case, the supercooling inhibitive effect is more improved than in the case of adding only tetra-iso-pentylammonium bromide. Therefore, the use of a combination of the both makes it possible not only to obtain the same level of supercooling inhibitive effect but also to reduce a variation in the quantity of latent heat of the hydrate or heat storage agent containing the hydrate as its major component which variation is caused by the addition of tetra-iso-pentylammonium bromide, even if the concentration by weight of tetra-iso-pentylammonium bromide is reduced.

When tetra-iso-pentylammonium bromide is added to the aqueous solution of tri-n-butyl-n-pentylammonium bromide such that the ratio by weight of tetra-iso-pentylammonium bromide to the aqueous solution of tri-n-butyl-n-pentylammonium bromide is 0.5% or more and 5.0% or less, the amount of disodium hydrogenphosphate to be added is preferably 0.1 to 2.0% by weight based on the aqueous solution of tri-n-butyl-n-pentylammonium bromide.
(4) In order to prevent supercooling of an aqueous solution of tri-n-butyl-n-pentylammonium bromide, a metal salt of an aliphatic carboxylic acid, for example, sodium stearate or potassium palmitate, may be added as the supercooling inhibitor.

A combination of tetra-iso-pentylammonium bromide and a metal salt of an aliphatic carboxylic acid may be used as the supercooling inhibitor to prevent supercooling more efficiently. For example, when tetra-iso-pentylammonium bromide is added to an aqueous solution of tri-n-butyl-n-pentylammonium bromide, a metal salt of an aliphatic carboxylic acid is added to the aqueous solution of tri-n-butyl-n-pentylammonium bromide and combined with tetra-iso-pentylammonium bromide. In this case, the supercooling inhibitive effect is more improved than in the case of adding only tetra-iso-pentylammonium bromide. Therefore, the use of a combination of the both makes it possible not only to obtain the same level of supercooling inhibitive effect but also to reduce a variation in the quantity of latent heat of the hydrate or heat storage agent containing the hydrate as its major component which variation is caused by the addition of tetra-iso-pentylammonium bromide, even if the concentration by weight of tetra-iso-pentylammonium bromide is reduced.

When tetra-iso-pentylammonium bromide is added to the aqueous solution of tri-n-butyl-n-pentylammonium bromide in a ratio by weight of 0.5% by weight or more and 5.0% by weight or less, the amount of the metal salt of an aliphatic carboxylic acid to be added is preferably 0.1 to 2.0% by weight based on the aqueous solution of tri-n-butyl-n-pentylammonium bromide.

### (C) Heat storage material containing tetra-n-butylammonium bromide, tri-n-butyl-n-pentylammonium bromide, tetra-iso-pentylammonium bromide and water

1. There will be explained new findings relevant to the present invention. Some aspects of the present invention are based on these new findings.

First, there will be explained an aqueous mixture solution of tetra-n-butylammonium bromide and tri-n-butyl-n-pentylammonium bromide.
(1) Tetra-n-butylammonium bromide forms a clathrate hydrate which has a harmonic melting point of about 12°C and the quantity of latent heat at the harmonic melting point is 178 J/g. Also, tri-n-butyl-n-pentylammonium bromide forms a clathrate hydrate which has a harmonic melting point of about 6°C and the quantity of latent heat at the harmonic melting point is 200 J/g.

The inventors of the present invention have made studies concerning the temperature at which a hydrate is produced when cooling mixture solutions differing in the ratio of an aqueous harmonic solution of tetra-n-butylammonium to an aqueous harmonic solution of tri-n-butyl-n-pentylammonium to be formulated. FIG. 1 shows the relation between the ratio of the weight of the aqueous harmonic solution of tetra-n-butylammonium to the weight of the aqueous mixture solution and the melting point of the mixture solution.

As shown in FIG. 1, tetra-n-butylammonium bromide, tri-n-butyl-n-pentylammonium bromide and water are mixed to form a mixture hydrate, ensuring that the melting point of the mixture hydrate can be adjusted to a temperature between the melting points of tetra-n-butylammonium bromide and tri-n-butyl-n-pentylammonium bromide, that is, from 6 to 12°C.

Therefore, the melting point of the mixture can be adjusted to a desired value between 6 to 12°C by regulating the composition of tetra-n-butylammonium bromide, tri-n-butyl-n-pentylammonium bromide and water to be formulated. This enables the provision of a heat storage agent having a melting point adapted to the heat storage temperature of a heat storage agent needed corresponding to the subject to be cooled by the heat storage agent and to the object of heat storage.

It has been confirmed that the total quantity of latent heat of the mixture hydrate is almost equal to the sum of the products of each quantity of heat of tetra-n-butylammonium bromide and tri-n-butyl-n-pentylammonium bromide and the ratio of each composition to be formulated.

With regard to a heat storage agent (particularly, a heat storage agent containing the clathrate hydrates as its major components) containing a clathrate hydrate in which tetra-n-butylammonium bromide is a guest molecule and a clathrate hydrate in which tri-n-butyl-n-pentylammonium bromide is a guest molecule, the inventors of the present invention have made studies as to a material and its composition which can produce the effect of preventing or inhibiting supercooling which arises when cooling a raw solution containing tetra-n-butylammonium bromide and tri-n-butyl-n-pentylammonium bromide as solutes, and, as a result, found that it is preferable to add tetra-iso-pentylammonium bromide or an aqueous solution containing it as this material.

The reason why the supercooling effect is produced by adding tetra-iso-pentylammonium bromide to the raw solution containing tetra-n-butylammonium bromide and tri-n-butyl-n-pentylammonium bromide as solutes is as follows.

Specifically, a hydrate of tetra-iso-pentylammonium bromide has a harmonic melting point of 28°C, which is sufficiently higher than the melting point of a hydrate produced from a raw solution containing tetra-n-butylammonium bromide and tri-n-butyl-n-pentylammonium bromide as solutes and the melting points of a hydrate of tetra-n-butylammonium bromide and a hydrate of tri-n-butyl-n-pentylammonium bromide. For this reason, the hydrate of tetra-iso-pentylammonium bromide is formed earlier than the hydrate of tetra-n-butylammonium bromide and hydrate of tri-n-butyl-n-pentylammonium bromide. Then, the hydrate of tetra-iso-pentylammonium bromide becomes a nucleus (product nucleus) which is an opportunity or inducing factor for the formation of the hydrate of tetra-n-butylammonium bromide and hydrate of tri-n-butyl-n-pentylammonium bromide to produce a hydrate which is to be a major component of the heat storage agent in a short time, with the result that the supercooling is prevented or prohibited. Also, the hydrate of tetra-iso-pentylammonium bromide is an analogue of the hydrate of tetra-n-butylammonium bromide and hydrate of tri-n-butyl-n-pentylammonium bromide and therefore they are compatible and have a similar crystal structure, with the result that the supercooling is prevented or prohibited.

Also, because tetra-iso-pentylammonium bromide has isopentyl as the alkyl constituting its molecule, it is less hydrophilic to water in contrast to tetra-n-butylammonium fluoride having n-butyl as the alkyl and it tends to form a clathrate hydrate from the state of an aqueous solution with ease. This tendency brings about the following results. Specifically, when a raw solution prepared by adding tetra-iso-pentylammonium bromide to an aqueous solution of tetra-n-butylammonium bromide and tri-n-butyl-n-pentylammonium bromide is cooled, a hydrate of tetra-iso-pentylammonium bromide is formed more rapidly than in the case where a raw solution prepared by adding tetra-n-butylammonium fluoride to an aqueous solution of tetra-n-butylammonium bromide and tri-n-butyl-n-pentylammonium bromide is cooled to produce a hydrate of tetra-n-butylammonium fluoride, and the hydrate of tetra-iso-pentylammonium bromide becomes a nucleus (product nucleus) which is an opportunity or inducing factor for the formation of the hydrate of tetra-n-butylammonium bromide and hydrate of tri-n-butyl-n-pentylammonium bromide with the result that the supercooling is prevented or prohibited efficiently.

As mentioned above, tetra-iso-pentylammonium bromide tends to form a hydrate more easily than tetra-n-butylammonium fluoride. This implies that tetra-iso-pentylammonium bromide is more effective as a supercooling inhibitor. Also, the amount of tetra-iso-pentylammonium bromide to be added as a supercooling inhibitor to an aqueous solution of tetra-n-butylammonium bromide and tri-n-butyl-n-pentylammonium bromide can be more reduced than in the case of adding tetra-n-butylammonium fluoride as a supercooling inhibitor, ensuring that an adverse influence, caused by the addition of the supercooling inhibitor, on the thermal characteristics of the heat storage agent containing the hydrate as its major component, can be decreased to a minimum.
(2) With regard to the amount of tetra-iso-pentylammonium bromide to be added as a supercooling inhibitor, it is preferable to add tetra-iso-pentylammonium bromide such that the ratio (percentage) by weight of tetra-iso-pentylammonium bromide to the total weight of tetra-n-butylammonium bromide and tri-n-butyl-n-pentylammonium bromide is in a predetermined range. When the ratio is less than the lower limit of the predetermined range, the amount of a hydrate of tetra-iso-pentylammonium bromide is decreased and the hydrate of tetra-iso-pentylammonium bromide scarcely becomes a product nucleus of a hydrate of tetra-n-butylammonium bromide and a hydrate of tri-n-butyl-n-pentylammonium bromide, resulting in insufficient supercooling inhibitive effect. When the ratio exceeds the upper limit of the predetermined range on the other hand, this adversely affects a hydrate produced from an aqueous solution containing tetra-n-butylammonium bromide, tri-n-butyl-n-pentylammonium bromide and tetra-iso-pentylammonium bromide or a hydrate containing tetra-n-butylammonium bromide, tri-n-butyl-n-pentylammonium bromide and tetra-iso-pentylammonium bromide and hence, the quantity of latent heat of a heat storage agent containing the hydrate as its major component, resulting in significant reduction in the quantity of latent heat which can be accumulated at a temperature range from 3 to 16°C.

Therefore, tetra-iso-pentylammonium bromide is added in an appropriate amount (or in a range of proper amount), thereby making it possible to produce the effect of the supercooling agent more exactly or more efficiently while reducing an adverse influence, caused by the addition of the supercooling inhibitor, on the thermal characteristics of the major component of the heat storage agent, to a minimum.
2. Next, the addition of tetra-iso-pentylammonium bromide as a supercooling inhibitor to an aqueous solution containing tetra-n-butylammonium bromide and tri-n-butyl-n-pentylammonium bromide and its effect will be explained in more detail.

### <Method of measurement and evaluation>

### A. Raw solution

Tetra-iso-pentylammonium bromide (TiPAB) was added to an aqueous mixture solution of tetra-n-butylammonium bromide (TBAB) and tri-n-butyl-n-pentylammonium bromide (TBPAB) prepared in a predetermined ratio by weight such that it was formulated in several different levels of ratios by weight (referred to as "addition ratio of TiPAB") based on the total weight of tetra-n-butylammonium bromide and tri-n-butyl-n-pentylammonium bromide, to prepare aqueous solutions (raw solutions) for forming a hydrate (incidentally, a hydrate produced by cooling this aqueous solution may be used by itself or in the form of a slurry obtained by dispersing or suspending it in an aqueous solution for forming a heat storage agent (particularly, a latent heat storage agent) or as a major component of the heat storage agent). Also, a raw solution in which tetra-iso-pentylammonium bromide was not added to an aqueous solution of tetra-n-butylammonium bromide and tri-n-butyl-n-pentylammonium bromide was prepared.

Specifically, raw solutions obtained by adding tetra-iso-pentylammonium in several different addition ratio of TiPABs to each of the standard raw solutions containing tetra-n-butylammonium bromide and tri-n-butyl-n-pentylammonium bromide in several different ratios, and raw solutions to which no tetra-iso-pentylammonium bromide was added were prepared.

### B. Method of evaluation

With regard to each hydrate produced by cooling the raw solutions prepared above, measurement and evaluation of supercooling inhibitive ability, quantity of latent heat, latent heat ratio and melting point as shown below are made. Through this measurement and evaluation, it is possible to find a preferable range of the addition ratio of tetra-iso-pentylammonium bromide (ratio of the weight of tetra-iso-pentylammonium bromide to the total weight of tetra-n-butylammonium bromide and tri-n-butyl-n-pentylammonium bromide)(addition ratio of TiPAB) at which a high supercooling inhibitive effect is obtained and a reduction in the quantity of latent heat at temperature range from 3 to 16°C is small.

### (1) Supercooling inhibitive ability

The raw solution prepared in the above manner is brought into contact with a metal pipe, through which a cooling medium flows, to thereby cool the raw solution to 3°C to measure the time required until hydrate crystals are produced showing the removal of supercooling. If the hydrate crystals are produced within 5 minutes, this is estimated to be that the supercooling inhibitive ability or supercooling inhibitive effect is observed. Moreover, this raw solution is cooled to 3°C to generate a hydrate and then, the solution is heated to 40°C to melt the hydrate produced by heating. When this operation including cooling or coagulation and melting is repeated 1000 times and a reduction in supercooling inhibitive ability is not observed, this is estimated to be that the supercooling inhibitive ability is not deteriorated or the supercooling inhibitive effect is durably maintained.

### (2) Quantity of latent heat, latent heat ratio and melting point

The raw solution prepared in the above manner is subjected to a differential scanning calorimeter (DSC) to measure the quantity of latent heat and melting point. The raw solution prepared in the above manner is cooled to measure the quantity of heat when a solid phase material produced by cooling is melted, at a temperature range from 3 to 16°C to thereby find the quantity of latent heat. The quantity of latent heat so-called here means thermal energy corresponding to latent heat at a temperature range from 3 to 16°C.

The quantity of melt latent heat of a hydrate produced from an aqueous solution of tetra-n-butylammonium bromide and tri-n-butyl-n-pentylammonium bromide to which tetra-iso-pentylammonium bromide is not added and the quantity of melt latent heat of a hydrate produced from an aqueous solution of tetra-n-butylammonium bromide, tri-n-butyl-n-pentylammonium bromide to which tetra-iso-pentylammonium bromide is added are measured by using DSC. The latent heat ratio of a hydrate produced from an aqueous solution of tetra-n-butylammonium bromide and tri-n-butyl-n-pentylammonium bromide to which tetra-iso-pentylammonium bromide is added to the quantity of latent heat (this is set to 1) of a hydrate produced from an aqueous solution of tetra-n-butylammonium bromide and tri-n-butyl-n-pentylammonium bromide to which tetra-iso-pentylammonium bromide is not added is defined as latent heat ratio. A variation in the quantity of latent heat as a function of a variation in the addition ratio of tetra-iso-pentylammonium bromide is evaluated by the latent heat ratio.

A hydrate produced from an aqueous solution of tetra-n-butylammonium bromide and tri-n-butyl-n-pentylammonium bromide to which tetra-iso-pentylammonium bromide is not added and a hydrate produced from an aqueous solution of tetra-n-butylammonium bromide and tri-n-butyl-n-pentylammonium bromide to which tetra-iso-pentylammonium bromide is added are respectively melted to measure each melting point. The temperature showing a peak in a graph in which the abscissa is the temperature and the ordinate is specific heat is melting point.

### C. Results of measurement and evaluation

Tetra-iso-pentylammonium bromide was added in several levels of ratios to each standard raw solution obtained by formulating tetra-n-butylammonium bromide and tri-n-butyl-n-pentylammonium bromide in several levels of ratios by weight (TBAB:TBPAB formulation ratio by weight) to prepare plural raw solutions. Also, each raw solution thus prepared was subjected to a test including the measurement and evaluation described in the above (1) and (2).

The results are shown in Tables 16 to 20. The case where the supercooling inhibitive effect or supercooling inhibitive ability was observed and no deterioration in these characteristics was found after coagulation and melting were repeated 1000 times was rated as "Good". The case where supercooling was not removed so that no hydrate crystal was produced, that is, the case where the supercooling inhibitive effect or supercooling inhibitive ability was not observed and a deterioration in these characteristics was found was rated as "Bad".

Hereinafter, the formulation ratio by weight of tetra-n-butylammonium bromide to tri-n-butyl-n-pentylammonium bromide is referred to as "TBAB/TBPAB formulation ratio by weight", the ratio of the weight of tetra-n-butylammonium bromide to the total weight of tetra-n-butylammonium bromide and tri-n-butyl-n-pentylammonium bromide is referred to as "TBAB/(TBAB + TBPAB) ratio by weight" and the ratio of the weight of tetra-iso-pentylammonium bromide to the total weight of tetra-n-butylammonium bromide and tri-n-butyl-n-pentylammonium bromide is referred to as "TiPAB addition ratio by weight".

### (1) In the case of a standard raw solution having a TBAB/TBPAB formulation ratio by weight of 36.45:3.41

In this case, the TBAB/(TBAB + TBPAB) ratio is 91.45% and the ratio of the weight of water to the weight of the raw solution in which tetra-iso-pentylammonium bromide is added to the standard raw solution is 60.14 to 67.87%.

Tetra-iso-pentylammonium bromide was added in several levels of addition ratio of TiPAB (ratio by weight) to the standard raw solution having a TBAB/TBPAB formulation ratio by weight of 36.45:3.41. The results of evaluation are shown in Table 16.

From the results shown in Table 16, the following fact is found.
<a> The supercooling effect is not obtained when the addition ratio of TiPAB is less than 0.89% by weight.
<b> When the addition ratio TiPAB exceeds 6.25% by weight, the latent heat ratio is greatly reduced and exceeds the practical tolerance limits of variation (10%) when the hydrate is used for a heat storage agent or its major component.

As a result of the above <b>, that is, the result that the quantity of latent heat at a temperature range from 3 to 16°C is dependent on the addition ratio of TiPAB cannot be inferred from conventional teachings. In light of this, studies have been made as to the reason why the quantity of latent heat is reduced.

The results of DSC measurement are plotted to make a graph as shown in FIG. 2 in which the abscissa is the temperature and the ordinate is the quantity of latent heat. In FIG. 2, "A" shown by the dotted line indicates the case where tetra-iso-pentylammonium bromide is not added to the standard raw solution containing tetra-n-butylammonium bromide and tri-n-butyl-n-pentylammonium bromide in a TBAB/TBPAB formulation ratio of 36.45:3.41 whereas "B" shown by the solid line shows the case where tetra-iso-pentylammonium bromide is added to the standard raw solution containing tetra-n-butylammonium bromide and tri-n-butyl-n-pentylammonium bromide in a TBAB/TBPAB formulation ratio of 36.45:3.41 such that the addition ratio of the weight of tetra-iso-pentylammonium bromide to the total weight of tetra-n-butylammonium bromide and tri-n-butyl-n-pentylammonium bromide (addition ratio of TiPAB) is 8.04%. When tetra-iso-pentylammonium bromide is added in an amount of 8.04%, there is a tendency that the range in which latent heat is observed is shifted to the higher-temperature side than in the case of adding no tetra-iso-pentylammonium bromide. Therefore, the quantity of latent heat at a temperature range from 3 to 16°C required when using a heat storage agent used in air conditioning applications is decreased. It is inferred that this phenomenon is the reason of the reduction in the quantity of latent heat at a temperature range from 3 to 16°C. As the range where latent heat is observed is shifted to a higher-temperature side, the melting point tends to also be shifted to the high-temperature side.

The above results will permit of the description that if the addition ratio of TiPAB is in a range from 0.89 to 6.25% when tetra-iso-pentylammonium bromide is added to the standard raw solution in which the TBAB/TBPAB formulation ratio is 36.45:3.41 (TBAB/(TBAB + TBPAB) ratio: 91.45%), the supercooling inhibitive ability is superior and the quantity of latent heat measured at a temperature range from 3 to 16°C falls within the practical tolerance limits of variation (variation in latent heat ratio is 10% or less).

### (2) In the case of a standard raw solution having a TBAB/TBPAB formulation ratio by weight of 32.40:6.82

In this case, the TBAB/(TBAB + TBPAB) ratio is 82.61% and the ratio of the weight of water to the weight of the raw solution formed by adding tetra-iso-pentylammonium bromide to the standard raw solution, is 60.78 to 68.51%.

Tetra-iso-pentylammonium bromide was added in several levels of addition ratio of TiPAB (ratio by weight) to the standard raw solution having a TBAB/TBPAB formulation ratio by weight of 32.40:6.82. The results of evaluation are shown in Table 17.

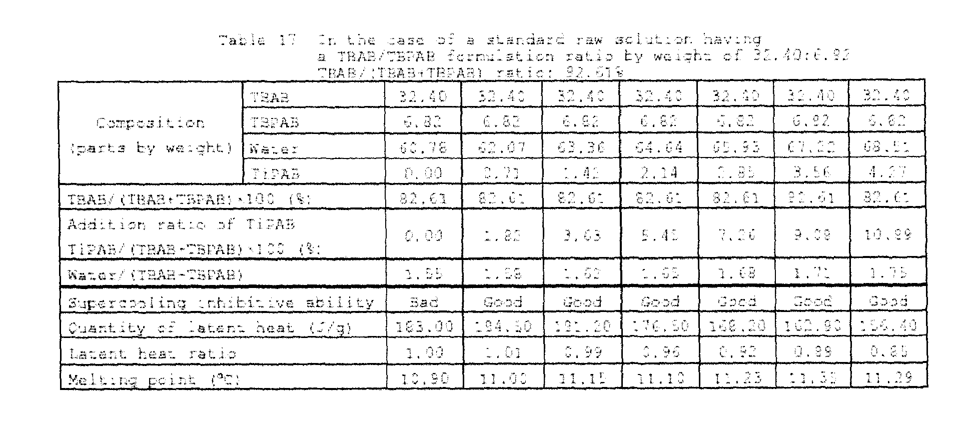

From the results shown in Table 17, the following fact is found.
<c> The supercooling effect is not obtained when the addition ratio of TiPAB is less than 1.82% by weight.
<d> When the addition ratio of TiPAB exceeds 7.26% by weight, the latent heat ratio is greatly reduced and exceeds the practical tolerance limits of variation (10%) when the hydrate is used for a heat storage agent or its major component.

The above results will permit of the description that if the addition ratio of TiPAB is in a range from 1.82 to 7.26% when tetra-iso-pentylammonium bromide is added to the standard raw solution in which the TBAB/TBPAB formulation ratio is 32.40:6.82 (TBAB/(TBAB + TBPAB) ratio: 82.61%), the supercooling inhibitive ability is superior and the quantity of latent heat measured at a temperature range from 3 to 16°C falls within the practical tolerance limits of variation (variation in latent heat ratio is 10% or less) when the hydrate is used for a heat storage agent or its major component.

### (3) In the case of a standard raw solution having a TBAB/TBPAB formulation ratio by weight of 20.25:17.05

In this case, the TBAB/(TBAB + TBPAB) ratio is 54.29% and the ratio of the weight of water to the weight of the raw solution formed by adding tetra-iso-pentylammonium bromide to the standard raw solution, is 62.70 to 70.43%.

Tetra-iso-pentylammonium bromide was added in several levels of addition ratio of TiPAB (ratio by weight) to the standard raw solution having a TBAB/TBPAB formulation ratio by weight of 20.25:17.05. The results of evaluation are shown in Table 18.

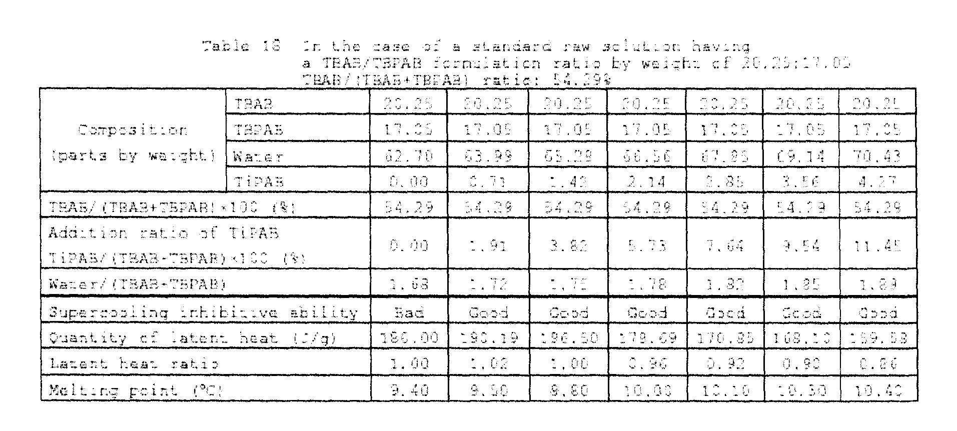

From the results shown in Table 18, the following fact is found.
<e> The supercooling effect is not obtained when the addition ratio of TiPAB is less than 1.91% by weight.
<f> When the addition ratio of TiPAB exceeds 9.54% by weight, the latent heat ratio is greatly reduced and exceeds the practical tolerance limits of variation (10%) when the hydrate is used for a heat storage agent or its major component.

The above results will permit of the description that if the addition ratio of TiPAB is in a range from 1.91 to 9.54% when tetra-iso-pentylammonium bromide is added to the standard raw solution in which the TBAB/TBPAB formulation ratio is 20.25:17.05 (TBAB/(TBAB + TBPAB) ratio: 54.29%), the supercooling inhibitive ability is superior and the quantity of latent heat measured at a temperature range from 3 to 16°C falls within the practical tolerance limits of variation (variation in latent heat ratio is 10% or less).

### (4) In the case of a standard raw solution having a TBAB/TBPAB formulation ratio by weight of 12.15:23.87

In this case, the TBAB/(TBAB + TBPAB) ratio is 33.73% and the ratio of the weight of water to the weight of the raw solution formed by adding tetra-iso-pentylammonium bromide to the standard raw solution, is 63.98 to 74.28%.

Tetra-iso-pentylammonium bromide was added in several levels of addition ratio of TiPAB (ratio by weight) to the standard raw solution having a TBAB/TBPAB formulation ratio by weight of 12.15:23.87. The results of evaluation are shown in Table 19.

**Table 19 In the case of a standard raw solution having a TBAB/TBPAB formulation ratio by weight of 12.15:23.87 TBAB/(TBAB+TBPAB) ratio: 33.73%**

| | | | | | | | | |
|---|---|---|---|---|---|---|---|---|
| Composition (parts by weight) | TBAB | 12.15 | 12.15 | 12.15 | 12.15 | 12.15 | 12.15 | 12.15 |
| | TBPAB | 23.87 | 23.87 | 23.87 | 23.87 | 23.87 | 23.87 | 23.87 |
| | Water | 63.98 | 65.27 | 66.56 | 69.13 | 70.42 | 71.71 | 74.28 |
| | TiPAB | 0.00 | 0.71 | 1.42 | 2.85 | 3.56 | 4.27 | 5.70 |
| TBAB/(TBAB+TBPAB)×100 (%) | | 33.73 | 33.73 | 33.73 | 33.73 | 33.73 | 33.73 | 33.73 |
| Addition ratio of TiPAB TiPAB/(TBAB+TBPAB)×100 (%) | | 0.00 | 1.98 | 3.95 | 7.91 | 9.88 | 11.86 | 15.81 |
| Water/(TBAB+TBPAB) | | 1.78 | 1.81 | 1.85 | 1.92 | 1.96 | 1.99 | 2.06 |
| Supercooling inhibitive ability | | Bad | Good | Good | Good | Good | Good | Good |
| Quantity of latent heat (J/g) | | 191.00 | 195.19 | 189.16 | 180.77 | 176.00 | 172.00 | 160.00 |
| Latent heat ratio | | 1.00 | 1.02 | 0.99 | 0.95 | 0.92 | 0.90 | 0.84 |
| Melting point (°C) | | 8.00 | 7.75 | 8.08 | 8.80 | 9.20 | 9.40 | 9.80 |

From the results shown in Table 19, the following fact is found.
<g> The supercooling effect is not obtained when the addition ratio of TiPAB is less than 1.98% by weight.
<h> When the addition ratio of TiPAB exceeds 11.86% by weight, the latent heat ratio is greatly reduced and exceeds the practical tolerance limits of variation (10%) when the hydrate is used for a heat storage agent or its major component.

The above results will permit of the description that if the addition ratio of TiPAB is in a range from 1.98 to 11.86% when tetra-iso-pentylammonium bromide is added to the standard raw solution in which the TBAB/TBPAB formulation ratio is 12.15:23.87 (TBAB/(TBAB + TBPAB) ratio: 33.73%), the supercooling inhibitive ability is superior and the quantity of latent heat measured at a temperature range from 3 to 16°C falls within the practical tolerance limits of variation (variation in latent heat ratio is 10% or less) when the hydrate is used for a heat storage agent or its major component.

### (5) In the case of a standard raw solution having a TBAB/TBPAB formulation ratio by weight of 4.05:30.69

In this case, the TBAB/(TBAB + TBPAB) ratio is 11.66% and the ratio by weight of water to the weight of the raw solution to which tetra-iso-pentylammonium bromide is added to the standard raw solution is 65.26 to 78.14%.

Tetra-iso-pentylammonium bromide was added in several levels of addition ratio of TiPAB (ratio by weight) to the standard raw solution having a TBAB/TBPAB formulation ratio by weight of 4.05:30.69. The results of evaluation are shown in Table 20.

**Table 20 In the case of a standard raw solution having a TBAB/TBPAB formulation ratio by weight of 4.05:30.69 TBAB/(TBAB+TBPAB) ratio: 11.66%**

| | | | | | | | | |
|---|---|---|---|---|---|---|---|---|
| Composition (parts by weight) | TBAB | 4.05 | 4.05 | 4.05 | 4.05 | 4.05 | 4.05 | 4.05 |
| | TBPAB | 30.69 | 30.69 | 30.69 | 30.69 | 30.69 | 30.69 | 30.69 |
| | Water | 65.26 | 66.55 | 67.84 | 70.41 | 72.99 | 75.56 | 78.14 |
| | TiPAB | 0.00 | 0.71 | 1.42 | 2.85 | 4.27 | 5.70 | 7.12 |
| TBAB/(TBAB+TBPAB)×100 (%) | | 11.66 | 11.66 | 11.66 | 11.66 | 11.66 | 11.66 | 11.66 |
| Addition ratio of TiPAB TiPAB/(TBAB+TBPAB)×100 (%) | | 0.00 | 2.05 | 4.10 | 8.20 | 12.30 | 16.40 | 20.50 |
| Water/(TBAB+TBPAB) | | 1.88 | 1.92 | 1.95 | 2.03 | 2.10 | 2.18 | 2.25 |
| Supercooling inhibitive ability | | Bad | Bad | Good | Good | Good | Good | Good |
| Quantity of latent heat (J/g) | | 193.00 | 198.00 | 198.00 | 191.09 | 183.00 | 175.26 | 163.19 |
| Latent heat ratio | | 1.00 | 1.03 | 1.03 | 0.99 | 0.95 | 0.91 | 0.85 |
| Melting point (°C) | | 5.90 | 6.61 | 6.95 | 7.43 | 8.03 | 8.30 | 8.91 |

From the results shown in Table 20, the following fact is found.
<i> The supercooling effect is not obtained when the addition ratio of TiPAB is less than 4.10% by weight.
<j> When the addition ratio of TiPAB exceeds 16.40% by weight, the latent heat ratio is greatly reduced and exceeds the practical tolerance limits of variation (10%) when the hydrate is used for a heat storage agent or its major component.

The above results will permit of the description that if the addition ratio of TiPAB is in a range from 4.10 to 16.40% when tetra-iso-pentylammonium bromide is added to the standard raw solution in which the TBAB/TBPAB formulation ratio is 4.05:30.69 (TBAB/(TBAB + TBPAB) ratio: 11.66%), the supercooling inhibitive ability is superior and the quantity of latent heat measured at a temperature range from 3 to 16°C falls within the practical tolerance limits of variation (variation in latent heat ratio is 10% or less) when the hydrate is used for a heat storage agent or its major component.

The results of the above (b), (d), (f), (h) and (j), that is, the result that the quantity of latent heat at a temperature range from 3 to 16°C is dependent on the addition ratio of TiPAB cannot be inferred from conventional teachings.
(6) To summarize the above results, a desirable addition ratio of tetra-iso-pentylammonium bromide to the total weight of tetra-n-butylammonium bromide and tri-n-butyl-n-pentylammonium bromide as a function of the TBAB/(TBAB + TBPAB) ratio is shown in Table 21. Table 21 also shows the ratio (water/(TBAB + TBPAB) by weight of water to the total weight of tetra-n-butylammonium bromide and tri-n-butyl-n-pentylammonium bromide and melting point corresponding to the preferable addition ratio.

**Table 21 Preferable concentration of TiPAB in each TBAB/(TBAB+TBPAB) ratio**

| TBAB/(TBAB+TBPAB)×100 (%) | Addition ratio of TiPAB TiPAB/(TBAB+TBPAB)×100 (%) | Water/(TBAB+TBPAB) (-) | Melting point (°C) |
|---|---|---|---|
| 91.45 | 0.89-6.25 | 1.52-1.62 | 11.68-12.06 |
| 82.61 | 1.82-7.26 | 1.58-1.68 | 11.00-11.23 |
| 54.29 | 1.91-9.54 | 1.72-1.85 | 9.50-10.30 |
| 33.73 | 1.98-11.86 | 1.81-1.99 | 7.75-9.40 |
| 11.66 | 4.10-16.40 | 1.95-2.18 | 6.95-8.30 |

As shown in Table 21, the addition ratio of TiPAB (TiPAB/(TBAB + TBPAB)%) which is the ratio by weight of TiPAB to the total weight of TBAB and TBPAB is preferably in the following range corresponding to the ratio by weight of TBAB to the total weight of TBAB and TBPAB (TBAB/(TBAB + TBPAB) ratio).

When the TBAB/(TBAB + TBPAB) ratio is 91.45%, a preferable addition ratio of TiPAB is 0.89% or more and 6.25% or less;
when the TBAB/(TBAB + TBPAB) ratio is 82.61%, a preferable addition ratio TiPAB is 1.82% or more and 7.26% or less;
when the TBAB/(TBAB + TBPAB) ratio is 54.29%, a preferable addition ratio of TiPAB is 1.91% or more and 9.54% or less;
when the TBAB/(TBAB + TBPAB) ratio is 33.73%, a preferable addition ratio of TiPAB is 1.98% or more and 11.86% or less; and
when the TBAB/(TBAB + TBPAB) ratio is 11.66%, a preferable addition ratio of TiPAB is 4.10% or more and 16.40% or less.

It may be said that if tetra-iso-pentylammonium bromide is added to an aqueous mixture solution (raw solution) formulated with tetra-n-butylammonium bromide, tri-n-butyl-n-pentylammonium bromide and water in the addition ratio of TiPAB falling in the above range to prepare a raw solution, the supercooling inhibitive ability is superior and the quantity of latent heat measured at a temperature range from 3 to 16°C falls within the practical tolerance limits of variation (variation in latent heat ratio is 10% or less).

A hydrate produced by cooling this raw solution is used by itself or in the form of a slurry obtained by dispersing or suspending it in an aqueous solution for forming a heat storage agent (particularly, a latent heat storage agent) or as a major component of the heat storage agent, and is also superior in supercooling inhibitive ability. The hydrate has also the characteristics that a drop in the quantity of latent heat measured at a temperature range from 3 to 16°C falls within the practical tolerance limits of variation (variation in latent heat ratio is 10% or less) caused by the addition of tetra-iso-pentylammonium bromide.
(7) Moreover, the formulation ratio by weight of tetra-n-butylammonium bromide (TBAB) to tri-n-butyl-n-pentylammonium bromide (TBPAB) was varied more finely to prepare standard raw solutions, which were then evaluated in the same manner as above to find a desirable addition ratio (addition ratio of TiPAB) of tetra-iso-pentylammonium bromide to the total weight of tetra-n-butylammonium bromide and tri-n-butyl-n-pentylammonium bromide, at which ratio, the hydrate was superior in supercooling inhibitive ability and a drop in the quantity of latent heat at a temperature range from 3 to 16°C was less than 10%.

FIG. 3 is a view showing the relation between the ratio by weight of TBAB to the total weight of TBAB and TBPAB (TBAB/(TBAB + TBPAB) ratio (%), shown by the abscissa) and the ratio by weight of TiPAB to the total weight of TBAB and TBPAB (addition ratio of TiPAB (%), shown by the ordinate). In order to show a desirable addition ratio of TiPAB (%) to the TBAB/(TBAB + TBPAB) ratio (%), the curve C showing the lower limit of the addition ratio of TiPAB (%) at which superior supercooling inhibitive ability is obtained and the curve D showing the upper limit of the addition ratio of TiPAB (%) at which a reduction in latent heat at a temperature range from 3 to 16°C caused by the addition of tetra-iso-pentylammonium bromide is less than 10% are shown.

If the addition ratio of TiPAB (%) enclosed by the curves C and D as a function of the TBAB/(TBAB + TBPAB) ratio is selected in FIG. 3, a hydrate-forming raw solution is obtained which is not deteriorated in supercooling inhibitive ability even if the coagulating and melting operation is repeated 1000 times, and is not reduced by 10% or more in latent heat at a temperature range from 3 to 16°C by the addition of tetra-iso-pentylammonium bromide. Also, a heat storage agent containing, as its major component, the hydrate produced by cooling the raw solution is obtained.
In order to clearly show the range of a preferable addition ratio of TiPAB (%), the TBAB/(TBAB + TBPAB) ratio which is the abscissa is divided in 10% increments as shown in FIG. 4, to find, in each divided interval, the maximum value of the curve C showing the lower limit of the concentration of TiPAB which is not deteriorated in supercooling inhibitive ability even if the coagulating and melting operation is repeated 1000 times, and the minimum value of the curve D showing the upper limit of the concentration of TiPAB (%) at which a reduction in latent heat at a temperature range from 3 to 16°C caused by the addition of tetra-iso-pentylammonium bromide is less than 10%. These maximum values and minimum values are shown by the dotted lines. If an addition ratio of TiPAB between the maximum value and the minimum value is selected, a hydrate-forming raw solution is obtained which is not deteriorated in supercooling inhibitive ability even if the coagulating and melting operation is repeated 1000 times, and is not reduced by 10% or more in latent heat at a temperature range from 3 to 16°C by the addition of tetra-iso-pentylammonium bromide. Also, a heat storage agent containing a hydrate produced by cooling the raw solution is obtained. The range of a preferable addition ratio by weight of TiPAB in each range of this TBAB/(TBAB + TBPAB) ratio is shown in Table 22.

**Table 22 Preferable concentration of TiPAB in each TBAB/(TBAB+TBPAB) ratio**

| TBAB/(TBAB+TBPAB)×100 (%) | Addition ratio of TiPAB TiPAB/(TBAB+TBPAB)×100 (%) | Water/(TBAB+TBPAB) (-) |
|---|---|---|
| 1 or more and less than 10 | 5.7-16.9 | 1.98-2.23 |
| 10 or more and less than 20 | 4.3-14.2 | 1.92-2.14 |
| 20 or more and less than 30 | 2.8-12.4 | 1.84-2.06 |
| 30 or more and less than 40 | 2.1-10.9 | 1.79-1.99 |
| 40 or more and less than 50 | 2.0-10.0 | 1.74-1.93 |
| 50 or more and less than 60 | 2.0-9.0 | 1.69-1.86 |
| 60 or more and less than 70 | 2.0-8.2 | 1.64-1.80 |
| 70 or more and less than 80 | 2.0-7.5 | 1.60-1.74 |
| 80 or more and less than 90 | 2.0-6.5 | 1.55-1.68 |
| 90 or more and less than 99 | 0.9-6.0 | 1.49-1.63 |

As shown in Table 22, the addition ratio of TiPAB (TiPAB/(TBAB + TBPAB)% that is the ratio by weight of TiPAB to the total weight of TBAB and TBPAB is preferably in the following range corresponding to the ratio by weight of TBAB (TBAB/(TBAB + TBPAB) ratio) that is the ratio by weight of TBAB to the total weight of TBAB and TBPAB. Also, the ratio by weight of water to the total weight of TBAB and TBPAB is shown in the following.

When the TBAB/(TBAB + TBPAB) ratio is 1% or more and less than 10%, the addition ratio of TiPAB is 5.7% or more and 16.9% or less and the weight of water is 1.98 times or more and 2.23 times or less based on the total weight of TBAB and TBPAB.

When the TBAB/(TBAB + TBPAB) ratio is 10% or more and less than 20%, the addition ratio of TiPAB is 4.3% or more and 14.2% or less and the weight of water is 1.92 times or more and 2.14 times or less based on the total weight of TBAB and TBPAB.

When the TBAB/(TBAB + TBPAB) ratio is 20% or more and less than 30%, the addition ratio of TiPAB is 2.8% or more and 12.4% or less and the weight of water is 1.84 times or more and 2.06 times or less based on the total weight of TBAB and TBPAB.

When the TBAB/(TBAB + TBPAB) ratio is 30% or more and less than 40%, the addition ratio of TiPAB is 2.1% or more and 10.9% or less and the weight of water is 1.79 times or more and 1.99 times or less based on the total weight of TBAB and TBPAB.

When the TBAB/(TBAB + TBPAB) ratio is 40% or more and less than 50%, the addition ratio of TiPAB is 2.0% or more and 10.0% or less and the weight of water is 1.74 times or more and 1.93 times or less based on the total weight of TBAB and TBPAB.

When the TBAB/(TBAB + TBPAB) ratio is 50% or more and less than 60%, the addition ratio of TiPAB is 2.0% or more and 9.0% or less and the weight of water is 1.69 times or more and 1.86 times or less based on the total weight of TBAB and TBPAB.

When the TBAB/(TBAB + TBPAB) ratio is 60% or more and less than 70%, the addition ratio of TiPAB is 2.0% or more and 8.2% or less and the weight of water is 1.64 times or more and 1.80 times or less based on the total weight of TBAB and TBPAB.

When the TBAB/(TBAB + TBPAB) ratio is 70% or more and less than 80%, the addition ratio of TiPAB is 2.0% or more and 7.5% or less and the weight of water is 1.60 times or more and 1.74 times or less based on the total weight of TBAB and TBPAB.

When the TBAB/(TBAB + TBPAB) ratio is 80% or more and less than 90%, the addition ratio of TiPAB is 2.0% or more and 6.5% or less and the weight of water is 1.55 times or more and 1.68 times or less based on the total weight of TBAB and TBPAB.

When the TBAB/(TBAB + TBPAB) ratio is 90% or more and less than 99%, the addition ratio of TiPAB is 0.9% or more and 6.0% or less and the weight of water is 1.49 times or more and 1.63 times or less based on the total weight of TBAB and TBPAB.

If a addition ratio of TiPAB in the above range is selected, a hydrate-forming raw solution is obtained which is not deteriorated in supercooling inhibitive ability even if the coagulating and melting operation is repeated 1000 times, and is not reduced by 10% or more in the quantity of latent heat at a temperature range from 3 to 16°C by the addition of tetra-iso-pentylammonium bromide. Also, a heat storage agent containing a hydrate produced by cooling the raw solution is obtained.
(8) Then, FIG. 5 shows a graph obtained by plotting the relation between the melting point of raw solutions having TBAB/(TBAB + TBPAB) ratios of 91.45%, 82.61%, 54.29%, 33.73% and 11.66% shown in Tables 16 to 20 and the addition ratio of TiPAB on the coordinates in which the abscissa is the melting point of a raw solution prepared by adding tetra-iso-pentylammonium bromide is added to an aqueous mixture solution formulated with tetra-n-butylammonium bromide, tri-n-butyl-n-pentylammonium bromide and water and the ordinate is the addition ratio (ratio by weight, addition ratio of TiPAB) of tetra-iso-pentylammonium bromide to the total weight of tetra-n-butylammonium bromide and tri-n-butyl-n-pentylammonium bromide. The solid lines in FIG. 5 show the upper limit and lower limit of the range of a preferable addition ratio of TiPAB of tetra-iso-pentylammonium bromide shown in Table 21.

If, as shown in FIG. 5, an addition ratio of tetra-iso-pentylammonium bromide in the range enclosed by the above upper and lower limits shown by the solid lines is selected corresponding to the TBAB/(TBAB + TBPAB) ratio when the melting point is in a range from 6 to 12°C, a hydrate-forming raw solution is obtained which is not deteriorated in supercooling inhibitive ability if the coagulating and melting operation is repeated 1000 times, and is not reduced by 10% or more in latent heat at a temperature range from 3 to 16°C by the addition of tetra-iso-pentylammonium bromide even. Also, a heat storage agent containing, as its major component, a hydrate produced by cooling the raw solution is obtained.

### 3. Examples of the present invention

### (1) Examples of the present invention will be explained.

Tetra-iso-pentylammonium bromide (TiPAB) was added to an aqueous mixture solution (TBAB/(TBAB + TBPAB) ratio: 91.45%) formulated with tetra-n-butylammonium bromide (TBAB) and tri-n-butyl-n-pentylammonium bromide (TBPAB) in a ratio by weight of 36.45:3.41 such that the amount of tetra-iso-pentylammonium bromide was 2.68% by weight based on the total weight of tetra-n-butylammonium bromide and tri-n-butyl-n-pentylammonium bromide (TBPAB), to prepare a raw solution.

When the prepared raw solution was cooled to 3°C to measure the time required until hydrate crystals were produced showing that supercooling was removed, the hydrate crystals were produced in about 5 minutes, showing that the supercooling was prevented. These hydrate crystals were created not only in one place but also in several places and the time required for hydrate crystals to grow to a size of about 10 mm was about 5 minutes, to confirm that hydrate crystals are created and grown in a short time.

Moreover, this raw solution was cooled to 3°C to generate a hydrate and then, the solution was heated to 40°C to melt the hydrate produced by heating. When this operation including coagulation and melting was repeated 1000 times to examine a variation in supercooling inhibitive ability, to confirm that no reduction in supercooling ability was observed.

The quantity of latent heat of this raw solution at a temperature range from 3 to 16°C was 176 J/g which was dropped by 2% from the quantity (180 J/g) of latent heat of the aqueous solution to which no tetra-iso-pentylammonium bromide was added, to confirm that almost no reduction in the quantity of latent heat was found.

As mentioned above, the addition of tetra-iso-pentylammonium bromide to an aqueous mixture solution formulated with tetra-n-butylammonium bromide, tri-n-butyl-n-pentylammonium bromide and water ensures that a hydrate-forming raw solution is obtained which can produce hydrate crystals in a short time, and is not deteriorated in supercooling inhibitive ability and is not reduced in latent heat at a temperature range from 3 to 16°C by the addition of tetra-iso-pentylammonium bromide even if the coagulating and melting operation is repeated 1000 times. Also, a heat storage agent containing, as its major component, a hydrate produced by cooling the raw solution is obtained.

### (2) The comparative tests shown below were made to confirm the effect of the above examples.

### Comparative Example 1

In order to confirm the effect given by the addition of tetra-iso-pentylammonium bromide (TiPAB), an aqueous mixture solution (TBAB/(TBAB + TBPAB) ratio: 91.45%) was prepared in which tetra-n-butylammonium bromide (TBAB) and tri-n-butyl-n-pentylammonium bromide (TBPAB) were blended in a ratio by weight of 36.45:3.41. When the prepared raw solution was cooled to 3°C, no hydrate crystal was created and a supercooling state was kept continuously even after 24 hours passed.

In the above examples in which tetra-iso-pentylammonium bromide (TiPAB) was added, on the contrary, hydrate crystals were created within about 5 minutes so that supercooling was prevented. It is therefore found that tetra-iso-pentylammonium bromide (TiPAB) develops supercooling inhibitive ability.

### Comparative Example 2

In the above example, tetra-iso-pentylammonium bromide was added to tetra-n-butyl-n-pentylammonium bromide and tri-n-butyl-n-pentylammonium bromide in an amount of 2.68% by weight based on the total weight of tetra-n-butylammonium bromide and tri-n-butyl-n-pentylammonium bromide. For this reason, the following comparison test to confirm the effects of the amount and addition method.

An aqueous mixture solution (TBAB/(TBAB + TBPAB) ratio: 91.45%) was prepared in which tetra-n-butylammonium bromide (TBAB) and tri-n-butyl-n-pentylammonium bromide (TBPAB) were blended in a ratio by weight of 36.45:3.41. On the other hand, activated carbon particles which were porous materials were impregnated with a harmonic solution of tetra-iso-pentylammonium bromide. Several of the activated carbon particles impregnated with tetra-iso-pentylammonium bromide were added to the above aqueous mixture solution of tetra-n-butylammonium bromide, tri-n-butyl-n-pentylammonium bromide and water and the mixture was cooled to 3°C. In this case, the amount of tetra-iso-pentylammonium bromide based on the total weight of tetra-n-butylammonium bromide and tri-n-butyl-n-pentylammonium bromide was about 0.035% by weight.

Hydrate crystals grew from the periphery of the activated carbon particles showing that supercooling was removed a few minutes after the start of the cooling of the raw solution to which the above activated carbon particles were added. Also, the time required for hydrate crystals to grow to a size of about 10 mm was about 10 minutes. Moreover, a coagulating and melting operation in which the raw solution formulated with activated carbon particles was cooled to 3°C to generate a hydrate, which was then heated to 40°C to melt the generated hydrate was repeated to examine a variation in supercooling inhibitive effect, with the result that no hydrate crystal was created when the coagulating and melting operation was repeated five times.

It is found from this Comparative Example, the time required for hydrate crystals to grow to a size of about 10 mm is two times that required in the case of Examples though a supercooling removing effect is observed. Also, since no hydrate crystal was created when the coagulating and melting operation was repeated five times, the method in which activated carbon particles which are porous bodies are impregnated with tetra-iso-pentylammonium bromide (TIPAB) poses a problem concerning a significant reduction in supercooling inhibitive ability caused by repetitions of coagulating and melting operation.

### Comparative Example 3

In Comparative Example 3, the activated carbon particles with porous bodies in Comparative Example 2 were changed to alumina porous bodies to evaluate the supercooling inhibitive effect in the same manner. In this case, the amount of tetra-iso-pentylammonium bromide based on the total weight of tetra-n-butylammonium bromide and tri-n-butyl-n-pentylammonium bromide was about 0.07% by weight. Also, the time required for hydrate crystals to grow to a size of about 10 mm was about 10 minutes, which was almost the same as in the case of Comparative Example 2. Also, no hydrate crystal was created when the coagulating and melting operation was repeated 20 times. In this case, this poses a problem concerning a significant reduction in supercooling inhibitive ability caused by repetitions of coagulating and melting operation.

### 4. With regard to a corrosion inhibitor

In the aqueous solution which contains tetra-n-butylammonium bromide and tri-n-butyl-n-pentylammonium bromide as solutes and is formulated with tetra-iso-pentylammonium bromide, bromine ions exist and are causes of corrosion of carbon steel and aluminum, and it is therefore preferable to add a corrosion inhibitor.

As the corrosion inhibitor, a deoxidizing type corrosion inhibitor which consumes dissolved oxygen to inhibit corrosion is preferable in the case where the heat storage agent is used in a closed environment, that is, in an environment into which dissolved oxygen is not intruded. Specific examples of such a deoxidizing type corrosion inhibitor include sodium salts or lithium salts of sulfites or thiosulfates. Also, film forming type corrosion inhibitors that form a coating film preventing corrosion on the surface of a metal to thereby protect the metal from corrosion may be used. Specific examples of these film forming type corrosion inhibitors include sodium salts, potassium salts, calcium salts or lithium salts of polyphosphates, tripolyphosphates, tetrapolyphosphates, disalts of hydrogenphosphates, pyrophosphates or metasilicates. These film forming type corrosion inhibitors may be used in combination with the aforementioned sulfites or thiosulfates which are deoxidizing type corrosion inhibitors to more improve corrosion inhibitive effects.

Moreover, examples of other corrosion inhibitors applicable in a closed environment include nitrites, benzotriazole, hydrazine, erysorbate, ascorbate and saccharides.

When the heat storage agent is used in an atmosphere, bromides or sulfates of zinc, magnesium or calcium may be used as the corrosion inhibitor used under an atmosphere. When at least one type selected from these corrosion inhibitors is added, a hydroxide ion and carbonic acid ion contained in the heat storage agent are bound with a zinc ion, magnesium ion or calcium ion contained in the corrosion inhibitor to form carbonates and hydroxides which are deposited on the surface of the metal to form a film, making it possible to inhibit corrosion, wherein these corrosion inhibitors function as the film forming corrosion inhibitor.

The aforementioned zinc, magnesium or calcium bromide or sulfate is added and at least one type of phosphate selected from sodium, potassium and lithium phosphates is further added to the heat storage agent to bind the phosphoric acid ion with the zinc ion, magnesium ion or calcium ion, thereby forming a phosphate, which is then deposited on the surface of the metal to form a coating film, thereby making possible to inhibit corrosion. Because phosphates of sodium, potassium or lithium have large solubility and it is therefore possible to form a coating film efficiently, thereby limiting corrosion.

A heat storage agent reduced in corrosiveness can be provided while it is not largely changed in melting point and quantity of latent heat by adding the above corrosion inhibitor to the heat storage agent.

### <Evaluation of the corrosion inhibitive effect of a corrosion inhibitor>

A corrosion inhibitor was added to a standard raw solution obtained by adding tetra-iso-pentylammonium bromide to an aqueous mixture solution in which tetra-n-butylammonium bromide and tri-n-butyl-n-pentylammonium bromide were formulated in a ratio by weight of 2:1, in an amount of 2% by weight based on the total weight of tetra-n-butylammonium bromide and tri-n-butyl-n-pentylammonium bromide to evaluate corrosion inhibitive effect in a closed environment and in an atmosphere.

### (1) Corrosion test in a closed environment

Each corrosion inhibitor shown in Table 23 was added to the standard raw solution to prepare sample raw solutions (17 to 20). A carbon steel plate and an aluminum plate were dipped in each sample solution contained in a closed container and the solution was kept at 90°C for one week. Then, a reduction in weight was measured to find the rate of corrosion. The results are shown in Table 23.

**Table 23 Results of corrosion test in a closed environment**

| Sample raw solution | Addition ratio of sodium sulfite (ppm) | Addition ratio of sodium polyphosphate (ppm) | Carbon steel corrosion rate (mm/y) | Aluminum corrosion rate (mm/y) |
|---|---|---|---|---|
| 17 | 1000 | None | 0.06 | 0.001 |
| 18 | None | 1000 | 0.07 | 0.002 |
| 19 | 1000 | 1000 | 0.04 | 0.001 |
| 20 | None | None | 0.18 | 0.003 |

When comparing the case of adding sodium sulfite (Sample raw solution 17) with the case of adding no corrosion inhibitor (Sample raw solution 20), the carbon steel corrosion rate of Sample raw solution 20 was 0.18 mm/y whereas that of Sample raw solution 17 was 0.06 mm/y. The aluminum corrosion rate of Sample raw solution 20 was 0.003 mm/y whereas that of Sample raw solution 17 was 0.001 mm/y. In any case, the corrosion rate could be reduced to 1/3 or less and the corrosion inhibitive effect was observed.

Also, when comparing the case of adding sodium polyphosphate (Sample raw solution 18) with the case of adding no corrosion inhibitor (Sample raw solution 20), the carbon steel corrosion rate of Sample raw solution 20 was 0.18 mm/y whereas that of Sample raw solution 18 was 0.07 mm/y and the aluminum corrosion rate of Sample raw solution 20 was 0.003 mm/y whereas that of Sample raw solution 18 was 0.002 mm/y. In any case, the corrosion rate could be reduced to about 1/2 and the corrosion inhibitive effect was proved by these results.

When comparing the case of adding a combination of sodium sulfite and sodium polyphosphate (Sample raw solution 19) with the case of adding no corrosion inhibitor (Sample raw solution 20), the carbon steel corrosion rate of Sample raw solution 20 was 0.18 mm/y whereas that of Sample raw solution 19 was 0.04 mm/y and the aluminum corrosion rate of Sample raw solution 20 was 0.003 mm/y whereas that of Sample raw solution 19 was 0.001 mm/y. In the case of carbon steel, the corrosion inhibitive effect was higher than that obtained when using each corrosion inhibitive agent independently.

In any case, carbon steel and aluminum both exhibited general corrosion without generation of local corrosion such as pitting corrosion. It was also confirmed that the aforementioned other corrosion inhibitors likewise had the effect of sufficiently inhibiting corrosion.

### (2) Corrosion test in an atmosphere

Each corrosion inhibitor shown in Table 24 was added to the standard raw solution to prepare sample raw solutions (21 to 24). A carbon steel plate and an aluminum plate were dipped in a container which was equipped with a Liebig's condenser and was so designed that the sample raw solution was brought into contact with the air while the solution was prevented from vaporizing, and were kept at 90°C for one week. Then, a reduction in weight was measured to find the rate of corrosion. The results are shown in Table 24.

**Table 24 Results of corrosion test in an atmosphere**

| Sample raw solution | Addition ratio of zinc sulfate (ppm) | Addition ratio of sodium polyphosphate (ppm) | Carbon steel corrosion rate (mm/y) | Aluminum corrosion rate (mm/y) |
|---|---|---|---|---|
| 21 | 100 | None | 0.13 | 0.002 |
| 22 | None | 1000 | 0.17 | 0.004 |
| 23 | 100 | 1000 | 0.05 | 0.002 |
| 24 | None | None | 0.32 | 0.006* |

| | | | | |
|---|---|---|---|---|
| * Pitting corrosion occurs | | | | |

When comparing the case of adding zinc sulfate (Sample raw solution 21) with the case of adding no corrosion inhibitor (Sample raw solution 24), the carbon steel corrosion rate of Sample raw solution 24 was 0.32 mm/y whereas that of Sample raw solution 21 was 0.13 mm/y and therefore, the corrosion rate could be reduced to 1/2 or less, to confirm that Sample raw solution 21 had corrosion inhibitive effect. In the case of Sample raw solution 24, the aluminum corrosion rate was 0.006 mm/y and pitting corrosion took place. However, in the case of adding zinc sulfate (Sample raw solution 21), the aluminum corrosion rate was 0.002 mm/y and no pitting corrosion was observed. The several or more-fold reduction in corrosion rate was observed and pitting corrosion was prevented, so that the corrosion inhibitive effect was confirmed.

Also, when comparing the case of adding sodium polyphosphate (Sample raw solution 22) with the case of adding no corrosion inhibitor (Sample raw solution 24), the carbon steel corrosion rate of Sample raw solution 24 was 0.32 mm/y whereas that of Sample raw solution 22 was 0.17 mm/y, and the aluminum corrosion rate of Sample raw solution 24 was 0.006 mm/y whereas that of Sample raw solution 22 was 0.004 mm/y. In the case of Sample raw solution 22, pitting corrosion was prevented. In any case, the corrosion rate could be reduced to about 1/2 like the case of adding zinc sulfate, to confirm corrosion inhibitive effect.

When comparing the case of using a combination of zinc sulfate and sodium polyphosphate (Sample raw solution 23) with the case of adding no corrosion inhibitor (Sample raw solution 24), the carbon steel corrosion rate of Sample raw solution 24 was 0.32 mm/y whereas that of Sample raw solution 23 was 0.05 mm/y, and the aluminum corrosion rate of Sample raw solution 24 was 0.006 mm/y whereas that of Sample raw solution 23 was 0.002 mm/y. In the case of Sample raw solution 23, pitting corrosion was prevented. In the case of carbon steel, the corrosion inhibitive effect was higher than that obtained when using each corrosion inhibitive agent independently.

In any case, carbon steel and aluminum both exhibited general corrosion without generation of local corrosion such as pitting corrosion. Because the pitting corrosion leads to the leakage of the heat storage agent in the pipe and container, it is largely effective to inhibit pitting corrosion by adding the corrosion inhibitor. It was also confirmed that the aforementioned other corrosion inhibitors could likewise sufficiently inhibit corrosion.

### 5. Method for preparing a heat storage agent or an aqueous solution for producing its major component

(1) Aqueous solutions containing tetra-n-butylammonium bromide and tri-n-butyl-n-pentylammonium bromide in concentrations equal to, lower than and higher than the harmonic concentration were mixed to prepare an aqueous solution having a desired melting point, to which was then added tetra-iso-pentylammonium bromide or an aqueous solution containing tetra-iso-pentylammonium bromide to prepare an aqueous solution for forming a hydrate or a heat storage agent or its major component. At this time, the amount of tetra-iso-pentylammonium bromide is designed to be 0.9% by weight or more and 16.9% by weight or less based on the total weight of tetra-n-butylammonium bromide and tri-n-butyl-n-pentylammonium bromide. Such a formulation adjustment enables the production of a hydrate which is superior in supercooling inhibitive effect, is reduced in the drop of quantity of latent heat at a temperature range from 3 to 16°C and serves as a heat storage agent or its major component.
(2) When tetra-iso-pentylammonium bromide is added as a supercooling agent to an aqueous mixture solution of tetra-n-butylammonium bromide and tri-n-butyl-n-pentylammonium bromide, a powder of tetra-iso-pentylammonium bromide or an aqueous solution of tetra-iso-pentylammonium bromide may be added. In order to prepare the aqueous solution for producing a heat storage agent or its major component, an aqueous solution of tetra-n-butylammonium bromide and tri-n-butyl-n-pentylammonium bromide and an aqueous tetra-iso-pentylammonium bromide solution may be mixed with each other, or water may be added to a mixture of a powder of tetra-n-butylammonium bromide, a powder of tri-n-butyl-n-pentylammonium bromide and a powder of tetra-iso-pentylammonium bromide, followed by mixing, or these powders may be added into water. It is needless to say that in any of these cases, the same results are obtained.
(3) In order to prevent supercooling of an aqueous solution of tetra-n-butylammonium bromide and tri-n-butyl-n-pentyl bromide, disodium hydrogenphosphate may be added as a supercooling inhibitor.

A combination of tetra-iso-pentylammonium bromide and disodium hydrogenphosphate used as supercooling inhibitors may be added to thereby prevent supercooling more efficiently. For example, when tetra-iso-pentylammonium bromide is added to an aqueous solution of tetra-n-butylammonium bromide and tri-n-butyl-n-pentylammonium bromide, disodium hydrogenphosphate is added to the aqueous solution of tetra-n-butylammonium bromide and tri-n-butyl-n-pentylammonium bromide together with tetra-iso-pentylammonium bromide. In this case, the supercooling inhibitive effect is more improved than in the case of adding only tetra-iso-pentylammonium bromide. Therefore, the use of a combination of the both makes it possible not only to obtain the same level of supercooling inhibitive effect but also to reduce a variation in the quantity of latent heat of the hydrate or heat storage agent containing the hydrate as its major component which variation is caused by the addition of tetra-iso-pentylammonium bromide, even if the concentration by weight of tetra-iso-pentylammonium bromide is reduced.

When tetra-iso-pentylammonium bromide is added to the aqueous solution of tetra-n-butylammonium bromide and tri-n-butyl-n-pentylammonium bromide in a ratio by weight of 0.9% by weight or more and 16.9% by weight or less to the total weight of tetra-n-butylammonium bromide and tri-n-butyl-n-pentylammonium bromide, the amount of disodium hydrogenphosphate to be added is preferably 0.1 to 2.0% by weight based on the aqueous solution of tetra-n-butylammonium bromide and tri-n-butyl-n-pentylammonium bromide.
(4) In order to prevent supercooling of an aqueous solution of tetra-n-butylammonium bromide and tri-n-butyl-n-pentylammonium bromide, a metal salt of an aliphatic carboxylic acid, for example, sodium stearate or potassium palmitate, may be added as the supercooling inhibitor.

A combination of tetra-iso-pentylammonium bromide and a metal salt of an aliphatic carboxylic acid may be used as the supercooling inhibitor to prevent supercooling more efficiently. For example, when tetra-iso-pentylammonium bromide is added to an aqueous solution of tetra-n-butylammonium bromide and tri-n-butyl-n-pentylammonium bromide, a metal salt of an aliphatic carboxylic acid is added to the aqueous solution of tetra-n-butylammonium bromide and tri-n-butyl-n-pentylammonium bromide together with tetra-iso-pentylammonium bromide. In this case, the supercooling inhibitive effect is more improved than in the case of adding only tetra-iso-pentylammonium bromide. Therefore, the use of a combination of the both makes it possible not only to obtain the same level of supercooling inhibitive effect but also to reduce a variation in the quantity of latent heat of the hydrate or heat storage agent containing the hydrate as its major component which variation is caused by the addition of tetra-iso-pentylammonium bromide, even if the amount by weight of tetra-iso-pentylammonium bromide is reduced.

When tetra-iso-pentylammonium bromide is added to the aqueous solution of tetra-n-butylammonium bromide and tri-n-butyl-n-pentylammonium bromide in a ratio by weight of 0.9% by weight or more and 16.9% by weight or less to the total weight of tetra-n-butylammonium bromide and tri-n-butyl-n-pentylammonium bromide, the amount of the metal salt of an aliphatic carboxylic acid to be added is preferably 0.1 to 2.0% by weight based on the aqueous solution of tetra-n-butylammonium bromide and tri-n-butyl-n-pentylammonium bromide.

This invention being thus described, it will be obvious that the technical scope of the present invention is not limited by the above embodiments and the same may be practiced in various ways without departing from the spirit of the present invention. For example, an embodiment in which non-described materials are added is included in the technical scope of the present invention insofar as these materials give no adverse influence on the effect of the present invention. Also, the technical scope of the present invention embraces the range of equivalence.

**Table 19 In the case of a standard raw solution having a TBAB/TBPAB formulation ratio by weight of 12.15:23.87 TBAB/(TBAB+TBPAB) ratio: 33.73%**

| | | | | | | | | |
|---|---|---|---|---|---|---|---|---|
| Composition (parts by weight) | TBAB | 12.15 | 12.15 | 12.15 | 12.15 | 12.15 | 12.15 | 12.15 |
| | TBPAB | 23.87 | 23.87 | 23.87 | 23.87 | 23.87 | 23.87 | 23.87 |
| | Water | 63.98 | 65.27 | 66.56 | 69.13 | 70.42 | 71.71 | 74.28 |
| | TiPAB | 0.00 | 0.71 | 1.42 | 2.85 | 3.56 | 4.27 | 5.70 |
| TBAB/(TBAB+TBPAB)×100 (%) | | 33.73 | 33.73 | 33.73 | 33.73 | 33.73 | 33.73 | 33.73 |
| Addition ratio of TiPAB TiPAB/(TBAB+TBPAB)×100 (%) | | 0.00 | 1.98 | 3.95 | 7.91 | 9.88 | 11.86 | 15.81 |
| Water/(TBAB+TBPAB) | | 1.78 | 1.81 | 1.85 | 1.92 | 1.96 | 1.99 | 2.06 |
| Supercooling inhibitive ability | | Bad | Good | Good | Good | Good | Good | Good |
| Quantity of latent heat (J/g) | | 191.00 | 195.19 | 189.16 | 180.77 | 176.00 | 172.00 | 160.00 |
| Latent heat ratio | | 1.00 | 1.02 | 0.99 | 0.95 | 0.92 | 0.90 | 0.84 |
| Melting point (°C) | | 8.00 | 7.75 | 8.08 | 8.80 | 9.20 | 9.40 | 9.80 |

**Table 20 In the case of a standard raw solution having a TBAB/TBPAB formulation ratio by weight of 4.05:30.69 TBAB/(TBAB+TBPAB) ratio: 11.68%**

| | | | | | | | | |
|---|---|---|---|---|---|---|---|---|
| Composition (parts by weight) | TBAB | 4.05 | 4.05 | 4.05 | 4.05 | 4.05 | 4.05 | 4.05 |
| | TBPAB | 30.69 | 30.69 | 30.69 | 30.69 | 30.69 | 30.69 | 30.69 |
| | Water | 65.26 | 66.55 | 67.84 | 70.41 | 72.99 | 75.56 | 78.14 |
| | TiPAB | 0.00 | 0.71 | 1.42 | 2.85 | 4.27 | 5.70 | 7.12 |
| TBAB/(TBAB+TBPAB)×100 (%) | | 11.66 | 11.66 | 11.66 | 11.66 | 11.66 | 11.66 | 11.66 |
| Addition ratio of TiPAB TiPAB/(TBAB+TBPAB)×100 (%) | | 0.00 | 2.05 | 4.10 | 8.20 | 12.30 | 16.40 | 20.50 |
| Water/(TBAB+TBPAB) | | 1.88 | 1.92 | 1.95 | 2.03 | 2.10 | 2.18 | 2.25 |
| Supercooling inhibitive ability | | Bad | Bad | Good | Good | Good | Good | Good |
| Quantity of latent heat (J/g) | | 193.00 | 198.00 | 198.00 | 191.09 | 183.00 | 175.26 | 163.19 |
| Latent heat ratio | | 1.00 | 1.03 | 1.03 | 0.99 | 0.95 | 0.91 | 0.85 |
| Melting point (°C) | | 5.90 | 6.61 | 6.95 | 7.43 | 8.03 | 8.30 | 8.91 |

## Claims

1. An aqueous solution for formation of a clathrate hydrate, **characterized by** comprising tetra-n-butylammonium bromide or tri-n-butyl-n-pentylammonium bromide as a solute, and tetra-iso-pentylammonium bromide added as a supercooling inhibitor.

2. An aqueous solution for formation of a clathrate hydrate, **characterized by** comprising tetra-n-butylammonium bromide as a solute, and tetra-iso-pentylammonium bromide added as a supercooling inhibitor.

3. The aqueous solution for formation of a clathrate hydrate according to claim 2, **characterized in that** a ratio by weight of tetra-iso-pentylammonium bromide to the aqueous solution containing tetra-n-butylammonium bromide as a solute is 0.1% or more and 2.0% or less.

4. The aqueous solution for formation of a clathrate hydrate according to claim 2, **characterized in that** a concentration of tetra-n-butylammonium bromide is 15% by weight or more and 40.5% by weight or less and the ratio by weight of tetra-iso-pentylammonium bromide to the aqueous solution containing tetra-n-butylammonium bromide as a solute is 0.1% or more and 2.0% or less.

5. The aqueous solution for formation of a clathrate hydrate according to any one of claims 2 to 4, **characterized by** further comprising a corrosion inhibitor.

6. A heat storage agent **characterized by** comprising a clathrate hydrate produced by cooling the aqueous solution for formation of a clathrate hydrate as claimed in any one of claims 2 to 5 to a temperature not higher than a hydrate formation temperature.

7. A heat storage agent **characterized by** comprising a clathrate hydrate produced by cooling the aqueous solution for the formation of a clathrate hydrate as claimed in any one of claims 2 to 5 to a temperature not higher than a hydrate formation temperature, wherein the heat storage agent includes a slurry in which the hydrate is dispersed or suspended in the aqueous solution or in an aqueous solvent thereof.

8. A heat storage agent **characterized by** comprising tetra-n-butylammonium bromide, tetra-iso-pentylammonium bromide as a supercooling inhibitor and water.

9. A method for formation of a clathrate hydrate or its slurry, **characterized by** comprising:
preparing the aqueous solution for formation of a clathrate hydrate as claimed in any one of claims 2 to 5; and
cooling the aqueous solution to produce a clathrate hydrate.

10. A heat accumulating and radiating method **characterized by** comprising:
accumulating thermal energy by cooling the aqueous solution for formation of a clathrate hydrate as claimed in any one of claims 2 to 5 to form a clathrate hydrate; and
radiating thermal energy by melting the produced clathrate hydrate.

11. A method for preparing an aqueous solution for forming a latent heat storage agent or its major component, **characterized by** comprising:
adding tetra-iso-pentylammonium to an aqueous solution of tetra-n-butylammonium bromide.

12. The method for preparing an aqueous solution according to claim 11, **characterized in that** a ratio by weight of tetra-iso-pentylammonium bromide to the aqueous solution of tetra-n-butylammonium bromide is 0.1% or more and 2.0% or less.

13. An aqueous solution for formation of a clathrate hydrate, **characterized by** comprising tri-n-butyl-n-pentylammonium bromide as a solute, and tetra-iso-pentylammonium bromide added as a supercooling inhibitor.

14. The aqueous solution for formation of a clathrate hydrate according to claim 13, **characterized in that** a ratio by weight of tetra-iso-pentylammonium bromide to the aqueous solution containing tri-n-butyl-n-pentylammonium bromide as a solute is 0.5% or more and 5.0% or less.

15. The aqueous solution for formation of a clathrate hydrate according to claim 13, **characterized in that** a concentration of tri-n-butyl-n-pentylammonium bromide is 15% by weight or more and 34.1% by weight or less and a ratio by weight of tetra-iso-pentylammonium bromide to the aqueous solution containing tri-n-butyl-n-pentylammonium bromide as a solute is 0.5% or more and 5.0% or less.

16. The aqueous solution for formation of a clathrate hydrate according to any one of claims 13 to 15, **characterized by** further comprising a corrosion inhibitor.

17. A heat storage agent **characterized by** comprising a clathrate hydrate produced by cooling the aqueous solution for formation of a clathrate hydrate as claimed in any one of claims 13 to 15 to a temperature not higher than a hydrate formation temperature.

18. A heat storage agent **characterized by** comprising a slurry in which a clathrate hydrate is dispersed or suspended in an aqueous solution or in an aqueous solvent thereof, said clathrate hydrate being produced by cooling the aqueous solution for the formation of a clathrate hydrate as claimed in any one of claims 13 to 15 to a temperature not higher than a hydrate formation temperature.

19. A heat storage agent **characterized by** comprising tri-n-butyl-n-pentylammonium bromide, tetra-iso-pentylammonium bromide as a supercooling inhibitor and water.

20. A method for formation of a clathrate hydrate or its slurry, **characterized by** comprising:
preparing the aqueous solution for formation of a clathrate hydrate as claimed in any one of claims 13 to 15; and
cooling the aqueous solution to produce a clathrate hydrate.

21. A heat accumulating and radiating method **characterized by** comprising:
accumulating thermal energy by cooling the aqueous solution for formation of a clathrate hydrate as claimed in any one of claims 13 to 15 to form a clathrate hydrate, and
radiating thermal energy by melting the produced clathrate hydrate.

22. A method for preparing an aqueous solution for forming a latent heat storage agent or its major component, **characterized by** comprising:
adding tetra-iso-pentylammonium bromide to an aqueous solution of tri-n-butyl-n-pentylammonium bromide.

23. The method for preparing an aqueous solution according to claim 22, **characterized in that** a ratio by weight of tetra-iso-pentylammonium bromide to the aqueous solution of tri-n-butyl-n-pentylammonium bromide is 0.5% or more and 5.0% or less.

24. An aqueous solution for formation of a clathrate hydrate, **characterized by** comprising tetra-n-butylammonium bromide and tri-n-butyl-n-pentylammonium bromide as solutes, and tetra-iso-pentylammonium bromide added as a supercooling inhibitor.

25. The aqueous solution for formation of a clathrate hydrate according to claim 24, **characterized in that** a ratio by weight of tetra-iso-pentylammonium bromide to the aqueous solution containing tetra-n-butylammonium bromide and tri-n-butyl-n-pentylammonium bromide is 0.9% or more and 16.9% or less.

26. The aqueous solution for formation of a clathrate hydrate according to claim 24, **characterized in that** an addition ratio of TiPAB which is a ratio of weight of tetra-iso-pentylammonium bromide to a total weight of tetra-n-butylammonium bromide and tri-n-butyl-n-pentylammonium bromide is, corresponding to a TBAB/(TBAB + TBPAB) ratio which is a ratio of the weight of tetra-n-butylammonium bromide to the total weight of tetra-n-butylammonium bromide and tri-n-butyl-n-pentylammonium bromide:
when the TBAB/(TBAB + TBPAB) ratio is 1% or more and less than 10%, the addition ratio of TiPAB is 5.7% or more and 16.9% or less;
when the TBAB/(TBAB + TBPAB) ratio is 10% or more and less than 20%, the addition ratio of TiPAB is 4.3% or more and 14.2% or less;
when the TBAB/(TBAB + TBPAB) ratio is 20% or more and less than 30%, the addition ratio of TiPAB is 2.8% or more and 12.4% or less;
when the TBAB/(TBAB + TBPAB) ratio is 30% or more and less than 40%, the addition ratio of TiPAB is 2.1% or more and 10.9% or less;
when the TBAB/(TBAB + TBPAB) ratio is 40% or more and less than 50%, the addition ratio of TiPAB is 2.0% or more and 10.0% or less;
when the TBAB/(TBAB + TBPAB) ratio is 50% or more and less than 60%, the addition ratio of TiPAB is 2.0% or more and 9.0% or less;
when the TBAB/(TBAB + TBPAB) ratio is 60% or more and less than 70%, the addition ratio of TiPAB is 2.0% or more and 8.2% or less;
when the TBAB/(TBAB + TBPAB) ratio is 70% or more and less than 80%, the addition ratio of TiPAB is 2.0% or more and 7.5% or less;
when the TBAB/(TBAB + TBPAB) ratio is 80% or more and less than 90%, the addition ratio of TiPAB is 2.0% or more and 6.5% or less; and
when the TBAB/(TBAB + TBPAB) ratio is 90% or more and less than 99%, the addition ratio of TiPAB is 0.9% or more and 6.0% or less.

27. The aqueous solution for formation of a clathrate hydrate according to any one of claims 24 to 26, the aqueous solution **characterized by** further comprising a corrosion inhibitor.

28. A heat storage agent **characterized by** comprising a clathrate hydrate produced by cooling the aqueous solution for formation of a clathrate hydrate as claimed in any one of claims 24 to 26 to a temperature not higher than a hydrate formation temperature.

29. A heat storage agent **characterized by** comprising a clathrate hydrate produced by cooling the aqueous solution for formation of a clathrate hydrate as claimed in any one of claims 24 to 26 to a temperature not higher than a hydrate formation temperature, wherein the heat storage agent includes a slurry in which the hydrate is dispersed or suspended in the aqueous solution or in an aqueous solvent thereof.

30. A heat storage agent **characterized by** comprising tetra-n-butylammonium bromide and tri-n-butyl-n-pentylammonium bromide, and tetra-iso-pentylammonium bromide as a supercooling inhibitor and water.

31. A method for formation of a clathrate hydrate or its slurry, **characterized by** comprising:
preparing the aqueous solution for formation of a clathrate hydrate as claimed in any one of claims 24 to 26; and
cooling the aqueous solution to produce a clathrate hydrate.

32. A heat accumulating and radiating method **characterized by** comprising:
accumulating thermal energy by cooling the aqueous solution for formation of a clathrate hydrate as claimed in any one of claims 24 to 26 to form a clathrate hydrate and radiating thermal energy by melting the produced clathrate hydrate.

33. A method for preparing an aqueous solution for forming a latent heat storage agent or its major component, **characterized by** comprising:
adding tetra-iso-pentylammonium bromide to an aqueous solution of tetra-n-butylammonium bromide and tri-n-butyl-n-pentylammonium bromide.

34. The method for preparing an aqueous solution according to claim 33, **characterized in that** a ratio of a weight of tetra-iso-pentylammonium bromide to a total weight of tetra-n-butylammonium bromide and tri-n-butyl-n-pentylammonium bromide is 0.9% or more and 16.9% by weight or less.
